(19) Europäisches Patentamt
European Patent Office
Office européen des brevets

(11) EP 2 466 336 A1

(12) EUROPEAN PATENT APPLICATION
published in accordance with Art. 153(4) EPC

(43) Date of publication:
20.06.2012 Bulletin 2012/25

(51) Int Cl.:
G01T 1/20 (2006.01)     C09K 11/04 (2006.01)

(21) Application number: 10808420.3

(22) Date of filing: 13.08.2010

(86) International application number:
PCT/RU2010/000449

(87) International publication number:
WO 2011/019303 (17.02.2011 Gazette 2011/07)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 13.08.2009 RU 2009130870

(71) Applicants:
• Zakrytoe Aktsionernoe Obschestvo "Naucho-Proizvodstvennaya Kommercheskaya Firma "Eltan Ltd""
Moskovskaya obl. 141190 (RU)
• "STC-MT" LLC
Moscow 105116 (RU)

(72) Inventors:
• SOSCHIN, Naum Petrovich
Fryazino
Moskovskaya obl. 141190 (RU)
• ULASYUK, Vladimir Nikolaevich
Fryazino
Moskovskaya obl. 141190 (RU)

(74) Representative: Jeck, Anton
Jeck - Fleck - Herrmann
Klingengasse 2/1
71657 Vaihingen/Enz (DE)

(54) MULTI-ELEMENT X-RAY RADIATION DETECTOR, RARE EARTH X-RAY LUMINOPHORE THEREFOR, AND METHOD FOR FORMING A MULTI-ELEMENT SCINTILLATOR AND DETECTOR AS A WHOLE

(57) Die Erfindung betrifft die Röntgentechnik und die medizinische Diagnostik, die Gamma-Defektoskopie von verschiedenen Erzeugnissen und Rohrleitungsanlagen. Der technische Effekt ist eine Verbesserung des Kontrastes des gewonnenen Integralbildes. Der mehrteilige Röntgenstrahlendetektor umfasst einen flachen mehrteiligen Szintillator, der in Form von einem diskreten Satz von lumineszierenden in Maschen eines Metallgitters sitzenden Heterophasen-Elementen ausgebildet ist. Das Metallgitter besteht aus einem röntgenstrahlungaufnehmenden und lichtreflektierenden Metall. Das Gitterrastermaß fällt mit dem der Lichtdetektormatrix zusammen. Das Metallgitter des mehrteiligen lumineszierenden Szintillators ist aus den Elementen mit den Atomnummern von N=26 (Eisen) bis N=74 (Wolfram) ausgebildet, weist versilberte Windungen auf und trennt die Szintillatorelemente optisch voneinander. Die Gitterwindungen haben einen Durchmesser von 0,06 mm bis 0,16 mm. Die freie Siebfläche des Metallgitters beträgt 45 % bis 82 %. Der Szintillator besteht aus einem Röntgenleuchtstoff auf der Basis von Multiligandoxysulfiden der Elemente aus der Gruppe Gadolinium, Lutetium, Europium einschließlich der ergänzenden Elemente Wismut und Rhenium, sowie Fluor, Chlor, Brom und Jod. Der Synthesevorgang verläuft in zwei Stufen. In der ersten Stufe entstehen Oxyhalogenide der Elemente, die eine kationische Untergruppe mittels Zusammenwirkung der mitgefällten Ausgangsoxide von Seltenerdmetallen, Bi und Re mit Ammoniumhalogeniden zusammenstellen. Danach wird das hergestellte Produkt in der Schmelze der alkalischen Chalkogeniden erneut thermisch behandelt.

**Description**

Die Erfindung betrifft einen mehrteiligen Röntgenstrahlendetektor, einen Seltenerdröntgenleuchtstoff dafür und ein Verfahren zur Herstellung eines mehrteiligen Szintillators und des gesamten Detektors nach den Oberbegriffen der Ansprüche 1 und 14.

Die Erfindung ist in der Röntgentechnik und der medizinischen Diagnostik einsetzbar, welche die Probleme beseitigt, die mit den Verfahren zur Erzeugung und Visualisierung von R6ntgenstrah lung innerhalb eines breiten Energiebereich von 5 keV bis 200 keV zusammenhängen. Die Erfindung kann insbesondere in der Medizin während der Überwachung und Auswertung von pathologischen Veränderungen im lebendigen Körper eingesetzt werden.

Die Röntgenologie als Teilbereich der Medizin rührt ihre Entwicklung vom Anfang des 20. Jahrhunderts her, und zwar sofort nach der Entdeckung der durchdringenden Strahlung durch den deutschen Physiker K. Röntgen. Diese Strahlungsart wurde anschließend nach seinem Namen genannt.

Die Erfindung kann auch bei einer schnellen Massen-Vorsorgeuntersuchung von Patienten eingesetzt werden, wobei offensichtliche Pathologien des menschlichen Körpers kurzzeitig erkannt werden müssen. Die Erfindung kann auch in der Zahnheilkunde zur Untersuchung des Kieferraumzustands des Menschen mit Hilfe von Röntgenstrahlung verwendet werden. Die Erfindung spielt auch für die Mammologie eine große Rolle. Dieser Teilbereich der Röntgenologie untersucht verschiedene Störungen in Milchdrüsegeweben des weiblichen Körpers.

Neben den zahlreichen Anwendungen in der Medizin kann die Erfindung auch für die Defektoskopie bei verschiedenen Systemen für zerstörungsfreie Prüfungen nutzvoll sein, z. B. für Schweißnahtprüfungen in verschiedenen Rohrleitungsanlagen. Ein wichtiges Anwendungsgebiet der Erfindung ist auch die Qualitätskontrolle von scharfer Munition, wobei der vorgeschlagene Detektor unter Einsatz von Röntgenstrahlung praktisch die einzige Möglichkeit zur Kontrolle einer sicheren Zusammensetzung der Munition darstellt.

Ein weiteres Anwendungsgebiet der Erfindung betrifft Anlagen für die Zollkontrolle von großen Maßgütern beim Eisenbahn-, Luft- und Seetransport.

Der Grund für solche zahlreichen Anwendungen der Erfindung ist nicht nur die Relevanz der Probleme auf dem Gebiet der Diagnostik und der zerstörungsfreien Prüfungen, sondern auch eine ungewöhnliche Kombination von moderner Werkstoffkunde (szintillierende Werkstoffe) und neuesten Halbleiter-Matrix-Systemen zum Datenablesen mit einer nachfolgenden computergestützten Verarbeitung und dem Dokumentieren dieser Informationen innerhalb einer Erfindung.

Die vorgeschlagene Einrichtung gehört zweifellos zum Hochtechnologiebereich.

Die ersten Röntgengeräte erschienen in den 20er Jahren des 20. Jahrhunderts. Sie umfassten eine Röntgenstrahlenquelle und einen Empfänger dafür. Ihrem physischen Aufbauprinzip nach haben die Röntgenstrahlenquellen in den vergangenen Jahren keine großen Anderungen erfahren: Ein bis zu Hochenergien beschleunigtes Elektronenbündel prallt gegen eine metallene Antikatode in einem Vakuumgerät, wobei die Antikatode üblicherweise aus Wolfram W bzw. Mo und seltener aus Cu hergestellt ist. Die dabei entstehende X-Bremsstrahlung wird gefiltert, um sie monochrom zu machen. Dann wird diese Strahlung über spezielle für diese Strahlung transparente Werkstoffe (z. B. eine Berylliumfolie) nach außen aus dem Gerät hinausgeleitet. Das dabei gebildete Röntgenstrahlenbündel hat einen Durchmesser von einigen Millimetern bis zu Dutzenden von Zentimeter. Diesem Strahlenbündel stehen normalerweise untransparente zu prüfende Strukturen bzw. zu untersuchende Patienten im Wege.

Die einzige Quelle für die Sichtbarmachung von Veränderungen der Dichte bei Röntgenquaten im Bündel waren lange Zeit nur Fotoemulsionsschichten. Diese wurden auf der Basis von Halogensilber hergestellt. Allerdings setzten ihre geringe Dichte (2-3 g/cm³) und ihre niedrige Empfindlichkeit von Halogensilber gegenüber der Röntgenstrahlung beachtliche Strahlenbelastungen voraus, was medizinisch äußerst unerwünscht ist.

Die ersten technischen Vorrichtungen zur wesentlichen Verminderung der Strahlenbelastungen für die Patienten waren die sogenannten Röntgenverstärkerfolien. Die Röntgenverstärkerfalie verändert physikalisch die Energie des Quants, welches auf die Fotoemulsion einwirkt. Dabei stellt die Röntgenverstärkerfolie eine feine Schicht von Röntgenleuchtstoff dar, welcher unter der Einwirkung von Röntgenstrahlen emittiert. Die Röntgenverstärkerfolie bestand normalerweise aus einer Kassette mit einem Front- und einem hinteren Schirm und einer fotoempfindlichen Folie dazwischen. Der Frontschirm war dünner und enthielt weniger Röntgenleuchtstoff). Der hintere Schirm konnte die Röntgenstrahlung praktisch komplett sperren.

Kalziumwolframat $CaWO_4$ war lange Zeit der Hauptwerkstoff für Röntgenleuchtstoffe, die in der Röntgenverstärkerfolie eingesetzt wurden. Seine hohe Gravitationsdichte und sein mittelmäßiger Energie-Umwandlungswirkungsgrad (6,0-8,0 %) waren eine gute Referenz für die Wahl von optimalen Zusammensetzungen für die Röntgenleuchtstoffe.

Die chemischen Zusammensetzungen der Röntgenleuchtstoffe sollten folgenden Anforderungen Rechnung tragen:

- eine durchschnittliche Atomnummer N von über 40 atomaren Masseeinheiten,
- eine Gravitationsdichte von über 4,5 g/cm³

- eine Energieausbeute bei einer Röntgenlumineszenz > 6 %
- eine Nachleuchtdauer von unter $1 \times 10^{-3}$ Sek. und
- einen Spektral-Strahlungshöchstwert von $\lambda$ > 400 nm.

Die Grundlage für die Röntgenographie ist eine direkte Zusammenwirkung der Röntgenstrahlung mit den biologischen Geweben eines lebendigen Körpers (wie es in der medizinischen Röntgendiagnostik der Fall ist) bzw. mit Bauteilen und Baugruppen und Verbindungen (wie in der Röntgenwerkstoffprüfung). Die moderne Röntgenographie ermöglicht es, folgende Bildparameter für die Darstellung sowohl auf einem Film als auch auf einem Durchleuchtungsschirm zu erreichen:

- eine Auflösung von 1-0,6 mm/pro Linienpaar;
- einen Kontrast, ein Helligkeitsverhältnis von Dunkel- und Hellfeldern zum Hintergrund von max. 30 %;
- eine Erkennbarkeit von 650-800 $\mu$m kleinen Details und
- eine Nachleuchtdauer von ca. $1\times10^{-3}$ Sek.

Es sei bemerkt, dass die Strahlungsbelastungen eines Patienten bereits zu jenen Zeiten zu groß waren (von 1,0 bis 10,0 Röntgen, z. B. bei der Untersuchung des Magen-Darm-Kanals) [1].

Bescheidene Ergebnisse der Röntgendiagnostik in den 40-70er Jahren führten zur Entwicklung von Diagnoseverfahren auf der Basis von anderen physikalischen Grundsätzen. So wurden 1965 die ersten wirksamen Systeme mit Bildwandlerröhren (EOIC) mit primärer Umwandlung der Röntgenstrahlung zu sichtbaren Licht entwickelt. Danach wurde das Licht mehrfach verstärkt und konnte dann in ein kleines Fernsehbild umgewandelt werden [2]. Als Primärumwandler wurden in den ersten Bildwandlerröhren (EOIC) Halogenid-Leuchtstoffe eingesetzt, z. B. ein wasserlösliches Jodzäsium. Das erschwerte das ohnehin komplizierte Verfahren zur Herstellung von dafür benötigten Geräten.

Zur gleichen Zeit wurde ein schnelles Röntgenschirmbildverfahren vorgeschlagen. Nach diesem Verfahren wurde das Bild von einem großen Leuchtstoff-Durchleuchtungsschirm auf einen Film mit Hilfe von lichtstarken optischen Objektiven übertragen. Der Vorteil dieser Systeme lag darin, dass viele Patienten ggfs. schnell untersucht werden konnten. Solche Schirmbildreihenuntersuchungen ermöglichten es allerdings, nur ziemlich große pathologische Herde im menschlichen Körper zu erkennen.

Seit Mitte der 70er Jahre fängt die Ära von Seltenerd-Röntgenleuchtstoffen [4] an. Zuerst wurden dafür Oxysulfide ($Y_2O_2S$:Tb, $Gd_2O_2S$:Tb) und dann Oxidbromide La-OBr verwendet. Die Hauptleistungen und die Problematik dieser Entwicklungsstufe auf dem Gebiet der Werkstoffe und Schirme für die Röntgenographie sind dem Stand der Technik [5] zu entnehmen.

Ein wichtiges wissenschaftliches Ergebnis auf dem Gebiet der Werkstoffkunde im Rahmen der Entwicklung der Röntgenographie war die Klarstellung der Anforderungen an die chemische Bindungsart der Röntgenleuchtstoff-Matrix sowie die erreichten sehr hohen Experimentalwerte für die Lichtenergieausbeute unter der Röntgen-bzw. Gamma-Erregung (z. B. 22 % für $Y_2O_2S$:Tb). Dies galt davor als unerreichbar.

Ein Vergleich in der Reihe $La_2O_3$-$La_2O_2S$-LaOBr:Tb zeugt von einer sehr wichtigen Rolle der kovalenten Komponente der chemischen Bindung in den Leuchtstoff-Matrizen, welche vorher vorwiegend eine Ionenbindung aufwiesen. Aufgrund der Forschungen und Verallgemeinerungen [6] kann folgende Tabelle für die Röntgenleuchtstoff-Parameter zusammengefasst werden.

Tabelle 1

| Material-Zusammensetzung | Atomnummer, N | Dichte g/cm$^3$ | Energieausbeute, % | Wellenlänge von Spektralhöchstwert, nm | Max. Strahlenhärte, keV | Nachleuchtdauer, mS |
|---|---|---|---|---|---|---|
| CaWO$_4$ | 61,8 | 6,1 | 6-9 | 420 | 80-100 | 1-1,1 |
| ZnCdS:Ag | 38 | 4,8 | 14-18 | 560 | 80-90 | 1-2 |
| CsJ:Tl | 41 | 4,2 | 12-18 | 550 | 80 | 0,001 |
| Y$_2$O$_2$S:Tb | 36 | 4,95 | 21-22 | 383,478 | 60-70 | 1-3 |
| Gd$_2$0$_5$:Tb | 59,9 | 6,00 | 20-24 | 545 | 100-120 | 1-3 |
| LaOBr:Tb | 49,3 | 5,7 | 18-20 | 543 | 80-110 | 1-2 |

Es ist kennzeichnend, dass es in dieser Entwicklungsperiode der Röntgenagraphie und besonders im Bereich der Kinder-Röntgenolagie gelungen ist, die Patientenbelastungen um das 3- bis 4-fache zu vermindern. Gleichzeitig stiegen die Röntgenstrahlenaufnahme-Kennziffern in den röntgenstrahlenempfindlichen Stoffen zu jener Zeit wesentlich an und es gelang, von den üblicherweise großkörnigen auf mitteldisperse körnige Werkstoffe für die Fertigung von Röntgenschirmen umzustellen. Das ermöglichte es, die Auflösung der Röntgenverstärkerfolien gleichzeitig um 20 - 40 % zu verbessern. Diese Maßnahmen reichten dafür aus, genau mit der Empfindlichkeitsgrenze des Auges Mikro-Kalzifikatbildungen in den Miichdrüsengeweben der Frauen zu erkennen. So fing eine neue Phase in der intensiven Entwicklung der Mammographie als vorbeugende Anwendung von praxisgerechter Röntgenagraphie an.

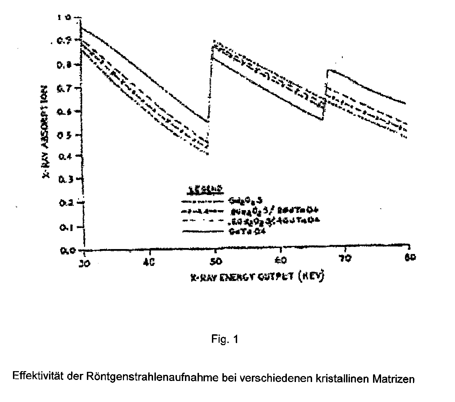

Zur gleichen Zeit haben die Ingenieure der Fa. PHILIPS vorgeschlagen, in EOIC-Bildschirmen säulenförmige röntgenstrahlenempfindliche Beschichtungen aus CsJ:TI zu benutzen. Ihr Vorteil bestand darin, dass das Licht und folglich die Röntgenlumineszenz- Quanten dank dem Lichtleitungseffekt in säulenförmigen Mikrokristallen von Zäsiumjodid praktisch gar nicht zerstreut wurden. Die Bildqualität in diesen Geraten war mit der von billigeren serienweise gebauten Nachfolgegeräten auf der Basis von Gadolinium-Oxysulfid vergleichbar. EOIC ermöglichten es, die Dynamik bei der Zusammenwirkung von weichen Körpergeweben mit Kontrastmitteln zu beobachten, z. B. wie Bariumsulfat bzw. Gadoliniumtantalat $GdTaO_4$ (Fig. 1). Dadurch war es nun möglich, ulzeröse und andere Pathologien im Körper des Patienten zu lokalisieren. Die Helligkeit der röntgentechnischen Bildschirme nahm mit der Anwendung von EOIC zu und schließlich kam es zum direkten Dokumentieren (Helligkeitsgrad von 2-3 kd/$m^2$) mittels optischer Bildübertragung bzw. mittels elektronischer Verstärkungs-Bildwandler, auch unter Anwendung von Matrizen mit CCD-Elementen [6].

Dabei gelang es, die Energiegrenze für die Erfassung von Weich-Röntgenstrahlung mit einer Energie von E = 100 bis 1000 eV zu vermindern. Diese Leistung wurde später in Raumschiffen für den fernen Kosmos verwendet [6].

Die hochempfindlichen Matrizen mit CCD-Elementen mit einem Schwellenwert von unter $10^{-2}$ Lux erlaubte die Entwicklung von modernen digitalen röntgenstrahlenempfindlichen Einrichtungen [7]. Hier wurde das Bild auf einem festen Träger kurzzeitig und unmittelbar während der Untersuchung des Patienten erzeugt.

Diese neue Phase der Echtzeit-Röntgenoskopie ist immer noch aktuell. Sie umfasst:

- eine Optimierung des Dispersitätsgrades des wirksamsten Materials auf der Basis von $Gd_2O_2S$:Tb [8]
- eine Auswahl der Zusammensetzungen auf der Basis dieses Leuchtstoffes [9];
- eine Entwicklung der Röntgenmikradetektoren [10];
- eine Verbesserung der Silizium-Matrizen [11];
- eine der ersten Ausführungen von digitalen Röntgendetektaren [12];
- einen digitalen Röntgendetektor [13];
- eine Anwendung von weißen Reflexionsbeschichtungen aus $Ta_2O_5$ in [14] und
- eine Nutzung von optisch transparenter Keramik aus $Lu_2O_3Eu$ für neue Röntgendetektoren [15].

Die jüngste Druckschrift zu dieser Thematik und der nächste Stand der Technik gegenüber der Erfindung ist ein Aufsatz von koreanischen Erfindern [16]. Hier wird zum ersten Mal die Ausführung und das Verfahren zur Herstellung einer mehrteiligen röntgenstrahlenempfindlichen $Gd_2O_2S$:Tb- Schicht in einem Polyäthylen- Presskörper vorgeschlagen. Deren Elemente sind mit einer 6000 Å-dicken Spiegelschicht aus Cr-Al bedeckt. Die Erfinder stellen einen 1,5-2-fachen Strahlenintensitätsverlust des Röntgenleuchtstaffes gegenüber einer Vollschicht des Leuchtstoffes fest. Die Modulatiansübertragungsfunktian in einem auf dem strukturierten Baumuster des röntgenstrahlenempfindlichen Bildschirm erzeugten Bild nimmt etwas zu und weist einige Extremwerte bei den dem geometrischen Maß der Bildschirmelemente nahe liegenden Frequenzen auf.

Einer der Vorteile des in [16] beschriebenen Detektors ist die Verringerung des allgemeinen Röntgenstrahlungshintergrundes, wobei die Röntgenstrahlung nur auf den mehrteiligen (pixelierten) Teilen des Szintillators auftrifft. Jedoch hat die vorgeschlagene Konstruktion einige wesentliche Nachteile:

- eine Verringerung der Strahlenintensität des mehrteiligen $Gd_2O_2S$:Tb- Bildschirmes;
- eine kleine Schichtdicke des Röntgenleuchtstoffes; dadurch kann die Röntgenstrahlung unmittelbar auf die Fotodioden-Anordnungen einfallen und ihre Degradation verursachen;
- ein schwerer Produktionsablauf bei der Herstellung von mikroskopischen mehrteiligen Detektoren wegen des Fotolithografie-Verfahrens; deswegen enthält das Bild im Originalaufsatz nur ein 2x3 cm kleines Muster des vorgeschiagenen Bildschirmes;
- ein niedriger Bildkontrast in der Szintillator-Schicht; um diese evtl. zu vergrößern, wird sie mit einem Schwarzgraphitnetz bedeckt;
- eine geringe $Gd_2O_2S$:Tb-Leuchtstoffschichtdicke ermöglicht es, nur niedrige Beschleunigungsspannungen, z. B. 45 keV, in der Röntgenröhre zu benutzen; dies reicht nur für eine dentologische Untersuchung des Kiefergebiets des Patienten aus.

Diese Mängel wurden offensichtlich in der Druckschrift [17] berücksichtigt, die als Prototyp der vorliegenden Erfindung betrachtet wird. [17] schlägt vor, auf einen Strahler aus CsJ:Tl zurückzugreifen, wobei die Dicke jeder Strahlungssäule 4-7 $\mu$m beträgt. Der gesamte Szintillator besteht aus Elementen, welche solche bis zu 16 mm große Strukturen aufweisen. In der Druckschrift wird behauptet, dass der Wert der Modulationsübertragungsfunktion des vorgeschlagenen Detektors MTF = 40 % bei einer Auflösung von 4 Linienpaare/mm und MTF = 10-20 % bei einer evtl. Erhöhung der Auflösung der Einrichtung bis zu 8 Linienpaare/mm unter gleichzeitigem Bildkontrastverlust beträgt.

Der Vorteil dieser bekannten Ausführung ist eine hohe quantenmäßige Erkennungsfähigkeit von DQL=0,28. Jedoch ist sogar der Einsatz von CsJ:Tl nicht immer wirksam, da Mikrokristalle Fehler aufweisen. Dabei können die eventuell auftretenden Probleme im Zusammenhang mit einer Vergrößerung der Bestrahlungsdosis der Patienten, nur teilweise durch die hohe Auflösung des Detektors ausgeglichen werden, wie die Erfinder angeben.

Zu den unbestreitbaren Vorteilen des vorgeschlagenen Prototyp-Detektors zählt das hohe quantenmäßige Erkennungsvermögen, was sich besonders bei niedrigen Röntgenstrahlungsenergien zeigt. Trotzdem weist der Prototyp einige wesentliche Mängel aus. Es geht vor allem um den kleinen Energiebereich der erregenden Röntgenstrahlung von 35 keV bis 60 keV, welcher für die Betrachtung von allen bekannten medizinischen Pathologien unzureichend ist. Zweitens sind hohe Bestrahlungsdosen von einigen Dutzenden Rontgen bei der Durchsicht von komplizierten Pathologien erforderlich, insbesondere wenn Kontrastmittel eingesetzt werden. Drittens ist jedes der einzelnen Strukurelemente des Detektors nur ca. 16 mm groß, deswegen ist das Bild mit einem Schleier bedeckt. Der Schleier entsteht, da jedes einzelne Strukturelement des Detektors nicht homogen ist. Viertens ist das Wasseraufnahmevermögen und die hohe Temperaturempfindlichkeit von Zäsiumjodid CsJ:Tl. nachteilig. Aus diesem Grund ist eine sehr sorgfältige Abdichtung der Elemente des Detektors und sein Schutz gegen Feuchtigkeit erforderlich. Dies ist aber eine sehr schwere Aufgabe, da die Detektorelemente sehr klein sind. Fünftens sei bemerkt, dass die Herstellung von säulenförmigen CsJ-Strukturen bei ihrer Aktivierung mittels des hochgiftigen Thalliums Tl ein ökologisch kompliziertes Problem darstellt. Es kann nur unter Anwendung von modernen Räumen mit einem geschlossenen Reinluftkreis gelöst werden.

Die Mängel des bekannten Röntgendetektors führen zu einem niedrigen Arbeitsenergiebereich des Detektors, einer Ungleichmäßigkeit seines Blickfeldes, einer niedrigen hydrolytischen und atmosphärischen Beständigkeit der bekannten Ausführung des Detektors. Die Hauptziele und -richtungen bei der Entwicklung eines neuen R6ntgenstrahlendetektors werden wie folgt formuliert:

Es ist Aufgabe der Erfindung, einen mehrteiligen Röntgenstrahlendetektor mit hohem Kontrast des gewonnenen Integralbildes zu entwickeln, wobei die Information unter Einsatz eines Matrixsystems mit Si-Fotodioden abgelesen wird. Ferner ist es Aufgabe der Erfindung, ein Gerät mit breitem Energiebereich der benutzten Röntgenstrahlung zu entwickeln, um mit verschiedenen Spannungen im Röntgenstrahler (Röhre) arbeiten zu können, und einen Satz von mehrteiligen Detektoren mit unterschiedlichen Auflösungen und mit gleichen Eigenschaften in Bezug auf Kontrast und Kontrastwiedergabefunktion zu schaffen.

Eine wichtige Aufgabe bei der Arbeit an der Erfindung ist die Entwicklung von einem verfahrenstechnischen Zyklus zur Herstellung eines mehrteiligen Detektors unabhängig von seinen geometrischen Abmessungen.

Eine weitere Aufgabe ist die Möglichkeit zum Bauen von einem mehrteiligen Mehrzweckindikator for verschiedene Arten der durchdringenden Strahlung, wie z. B. niederenergetische Röntgenstrahlung (bis 10-15 keV), Gamma-Strahlung mit Energie von 150-250 keV sowie langsame Neutronbündel mit Energie von E = 0,1 eV bis 1-2 eV, zu erkennen.

Die gestellten Aufgaben werden durch die Merkmale der Ansprüche 1 und 14 gelöst.

Der Matrix-Röntgenstrahlendetektar enthält einen flachen mehrteiligen Szintillator, welcher die auf die Szintillator- Außenfläche einfallende Röntgenstrahlung in sichtbares Licht umwandelt, und eine Lichtdetektormatrix, die die von der Szintillator-Innenfläche emittierende Lumineszenzstrahlung in ein elektrisches Signal umsetzt. Der Matrix-Röntgenstrahlendetektar ist **dadurch gekennzeichnet, dass** der genannte Lumineszenz-Szintillator in Form eines diskreten Satzes von lumineszierenden in Gittermaschen sitzenden Heterophasen-Elementen ausgebildet ist, wobei das Gitter aus einem röntgenstrahlungaufnehmenden und einem lichtreflektierenden Metall besteht, und wobei das Rastermaß, der Querschnitt und die Stärke der Gitterbrücke die geometrischen Maße von jedem einzelnen Lumineszenzelement aufweisen und mit dem Rastermaß der Lichtdetektormatrix zusammenfallen, dass die Rückfläche des genannten Metallgitters dabei eine Reflexionsspiegeischicht ausweist, während auf der Frontfläche eine mehrteilige fotoempfindliche Halbleitermatrix entsteht, deren jedes Element optisch im Kontakt mit den Elementen des Lumineszenzdetektors steht, welche durch die Röntgenstrahlung mit einer Energie von 30 bis 140 keV gleichzeitig erregt werden.

Ein Ausführungsbeispiel der Erfindung wird anhand der Zeichnungen näher erklärt. Es zeigen:

Fig.1 Die Intensitätsabhängigkeit bei Röntgenlumineszenz für ver- schiedene Verbindungen, die Ionen von Gd, O, S, Ta, Lu enthal- ten. Dabei sind Energie-Sprünge auf den inneren K- Umlaufbahnen der Elektronen der jeweiligen Atome ersichtlich.

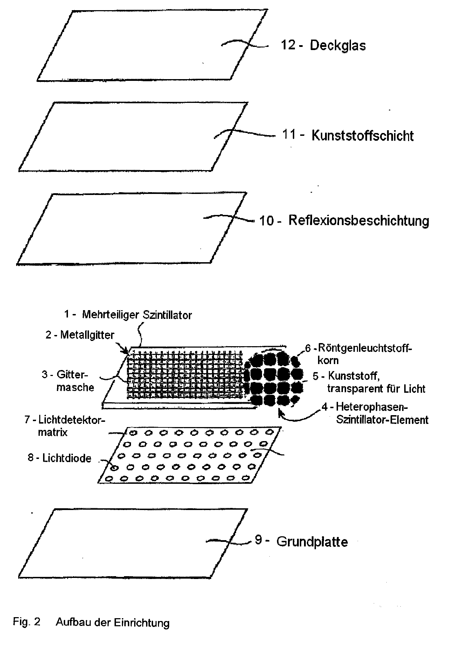

Fig. 2 Das Aufbauschema der neuen Einrichtung. Die Einrichtung ge- mäß diesem Schaubild weist einen mehrteiligen Szintillator 1 auf, der aus einem orthogonalen Metallgitter mit verflochtenen Drah- ten 2 besteht. In den Maschen 3 des Drahtes 2 sitzen Hetero- phasen-Elemente 4, welche einen unter Röntgenstrahlung lumi- neszierenden Werkstoff (Röntgenleuchtstoff) enthalten. Das De- tail zur Fig. 2 zeigt den Aufbau einer Metallgittermasche. In der Gittermasche sitzt das Heterophasen-Element 4 des Szintillators 1. Es besteht aus einem lichtdurchlässigen Kunststoff 5 mit darin verteilten Körnern eines Röntgenleuchtstoffes 6. Eine Matrix 7 der Halbleiter- Fotodiodenelemente grenzt an die Innenfläche des Szintillators 1 an. Diese Matrix 7 schließt Si- Fotodioden 8 und ein System von Steuerelektroden ein, welches auf einer Unterla- ge 9 angeordnet ist. Die Außenoberfläche des Szintillators 1 hat eine zweilagige, bis zu 0,6 µm starke Reflexionsspiegelschicht 10, die für die Röntgenstrahlung transparent ist. Als Träger ist eine Deckglasplatte 12 verwendet, welche alle Ar- beitsschichten des Detektors mit Hilfe einer Kunststoffbeschich- tung 11 zusammenbindet.

Fig. 3    Gussfilmbeschichtungen für den Röntgen-Szintillator.

Fig. 4    Eine Mikroaufnahme von einem Kom des Röntgen-Leuchtstoffes und

Fig. 5    eine Aufnahme vom Bildschirm des Detektors.

Es folgt eine kurze Beschreibung der physikalischen Besonderheiten des Betriebs des neuen Matrix-Detektors. Der Matrix-Detektor enthält ein mit Röntgenleuchtstoff-körnern gefülltes Metallgitter als Träger. Während der visuellen Tests wurde festgestellt, dass das Metallgitter die Volischicht von Leuchtstoff in eine mosaikartige mehrteilige Schicht aufteilt und dadurch den Bildkontrast auf dem Detektor wesentlich und zwar um das 1,5- bis 2-fache erhöht.

Der genannte Unterschied wird in einem Röntgenstrahlendetektor realisiert, welcher sich dadurch unterscheidet, dass seine rontgenstrah!enempfindlche Schicht in Mosaikform ausgebildet ist, die aus einer Röntgenleuchtstoffschicht mittels der Maschen des aus den Elementen mit Atomnummern von 24 bis 74 gebildeten Metallgitters ausgebildet ist.

Die Betrachtung der physikalischen Prozesse, die während der Arbeit des Geräts vorkommen, zeigt Folgendes:

Ein über die ganze Detektor-Fläche breites Röntgenstrahlenbündel fällt auf die Frontoberfläche des Geräts. Dieses Bündel wird in der Vakuum-Röntgenröhre mit einer Plattenwechselspannung von 60 keV bis U= 125 keV und einer Arbeits-Antikatode aus Mo gebildet. Die beim Bremsen des Eiektronenbündels in der Röhre entstehende Röntgenstrahlung tritt über ein vakuumdichtes Fenster aus Berylliumfolie aus. Die hochenergetische Röntgenstrahlung passiert die Reflexionsspiegelschicht auf der Detektoroberfläche und erreicht die Röntgenieuchtstoffkörner.

Diese Ausgangsröntgenstrahlung erzeugt auf ihrem Weg durch die körnige Leuchtstoffschicht primäre K-Elektronen und danach Sammelenergieschwankungen, Plasmonen. Diese zerfallen in Ladungsträgerpaare (e+p), welche unmittelbar mit lonen von Aktivatoren und Sensibilisatoren zusammenwirken. Diese lonen bilden die Grundlage für die Röntgenleuchtstoffkörner. Das primäre Röntgenquant passiert über eine 20 bis 200 µm lange Strecke in der Szintillation- Treffplatte. Diese Strecke wird nicht nur durch die Anfangsenergie $E_{Röntg}$, sondern auch durch die Kornmaterialdichte des angewendeten Röntgenleuchtstoffes festgelegt. Die Eindringtiefe von einem Quant mit E = 60 keV beträgt in einem $Gd_2O_2S$:Tb Leuchtstoff mit einer Dichte $\rho$=6,6 g/cm$^3$ bekanntlich $\varepsilon$=0,1p$\times d_{av}$=0,1$\times$6,6$\times$10=40 mg/cm$^2$. Für die An- fangsenergie von einem Quant mit E = 120 keV beträgt die Eindringtiefe ca. 160 mg/cm$^2$.

Weiter unten wird eine zusätzliche technische Lösung zur Verminderung der erforderlichen vollständigen Ein- dringtiefe bis 100 mg/cm$^2$ für Arbeitswerte der Röntgenquantenergien beschrieben.

Ein erregtes aktives lon (Aktivator) befindet sich innerhalb des Röntgenleuchtstoffes und wird normalerweise unter der Wirkung eines Elektron-Loch-Paars ionisiert. Das heißt, es verändert seinen Anfangs-Oxidationsgrad, z. B. das aktive lon $E_U{}^{+3}$ nimmt ein Elektron auf:

$$Eu^{+3}+e \rightarrow Eu^{+2^*}+p \rightarrow Eu^{+3^*} \rightarrow Eu^{+3} (5D_J\text{-}7FJ)$$

Anschließßend erfolgt eine Strahlung von Rotquanten mit Wellenlängen von A = 626 nm bis A = 710 nm. Die mögliche durch den Röntgenleuchtstoff ausgestrahlte Quantenzahl beträgt N=Ep/h$\omega$pr, wobei Ep die Anfangsenergie des Quants und hwpr die Plasmonenergie ist.

Es wurde versuchsweise nachgewiesen: Die Werte von hwpl des linearen Cluster-Plasmons ermöglichen eine genauere Bestimmung der Quantenmenge als die hwpr-Größe des räumlichen Plasmons. Es sei klargestellt: Je größer die Atommasse der Elemente ist, die das Cluster bilden, desto kleinere Energie wird benötigt, um dieses Cluster erregen zu können. So beträgt h$\omega$pr=16-20 eV für den Röntgenleuchtstoff $Gd_2O_2S$:Tb, während die Energie des linearen Clusters für den vorgeschlagenen Werkstoff $(Gd,Lu)_2O(Br,N)S$ bis aus hwpl = 14,8 eV abnimmt. Das zeugt von der beachtlichen Zunahme der Energieeffizienz der neuen lumineszierenden Stoffe.

Die Energie der gebildeten Lichtemissionsquanten des Röntgenleuchtstoffes liegt im Bereich von hu = 2,1 eV bis hu = 1,85 eV. Die Quanten werden aus jedem Korn des Röntgenleuchtstoffes nach allen Richtungen verteilt und füllen somit den 4$\pi$ -Raum aus. Um den Anteil des an die lichtempfindlichen Elemente des Detektors gerichteten Lichts zu vergrößern, wird vorgeschlagen, auf der Außenoberfläche des Detektors eine 0,1 bis 0,6 μm starke Spiegelschicht aus Al-Folie zu bilden. Diese Spiegelschicht erhöht die Leuchthelligkeit der Detektorelemente um 40-60 %.

Dieser Vorteil wird in dem neuen mehrteiligen Detektor erreicht. Dieser zeichnet sich dadurch aus, dass seine Rückfläche mit einem 2000 Å bis 6000 Å dicken zweilagigen Metallspiegelfilm beschichtet ist, wobei eine bis zu 1000 Å dicke metallische Silberschicht unmittelbar auf dem Detektor liegt, und eine bis zu 5000 Å dicke Aluminiumspiegelschicht oberhalb der Silberschicht gebildet ist.

Die Reflexion des vorgeschlagenen Zweilagenfilmes beträgt 88-92 % gegenüber von 82 % der einlagigen Al-Beschichtungen, welche normalerweise in den Technologien für Elektronenbildgeräte angewendet werden.

Darüber hinaus sind um die Lichtsammlung im Detektor zu verbessern, die Windungen der Drahte mit Al (Vakuumverfahren) bzw. mit Ag (galvanisch bzw. nach Vakuumverfahren) beschichtet. Dabei bilden die Drahtwindungen die Grundlage für den gitterartigen Aufbau des Detektors. Diese Maßnahme ermöglicht es, bis zu 10-15% mehr Licht in der nichtstrukturierten Schicht zusätzlich zu dem die lichtempfindlichen Elemente des Detektors erreichenden Licht zu bekommen, wie durchgeführte Messungen belegen.

Der genannte Vorteil wird in dem Detektor dadurch erreicht, dass die Gitterwindungen mit einer bis zu 2000 Å dicken metallischen Silberspiegelschicht bedeckt sind, die galvanisch oder nach einem Vakuumverfahren erzeugt wird.

Die Netzbahnenparameter für die Röntgendetektoren und die wichtigsten Parameter des Metallgitters sind weiter unten angeführt. Ein Gitter ist ein Konstruktionsteil, welches aus Metalldrähten besteht, die miteinander kontaktieren und senkrecht zueinander liegen. Dem Herstellungsverfahren nach unterscheidet man unter anderem gewebte Gitter - Netze, die mit Webmaschinen hergestellt werden. Diese haben einen Kettfaden und einen senkrecht dazu verlaufenden Schussfaden. Das Netz hat eine Nummer, die üblicherweise auf die Nennzahl der Kettfaden-Drähte pro 1 cm des Netzes hinweist. Dabei wird auch der Nenndurchmesser des benutzten Drahtes angegeben, normalerweise in Millimeterbruchteilen. Ein wichtiger Gitterkennwert ist die lichte Gittergröße: Es handelt sich dabei um den linearen Raum, welcher zwischen den Windungen des Gitters nicht gefüllt ist. Wird die Fläche dieses Raums betrachtet, so wird dieser Parameter als freie Siebfläche des Gitters in % bezeichnet.

Als Beispiel können die Angaben über das gewebte Gitter Nr. N20 dienen. Dieses Gitter hat sowohl für die Kettfäden als auch für die Schussfäden den gleichen Draht mit einem Durchmesser von 0,10 mm. Die lichte Gittergröße für den genannten Draht beträgt jeweils 0,400 mm in Bezug auf den Kettfaden und den Schussfaden. Die berechnete freie Siebfläche des Quadrat-Maschengitters beträgt 64 %. Das weist darauf hin, dass 64 Prozent des auf die Gitteroberfläche auftreffenden Lichts bzw. der durchdringenden Strahlung das Gitter passieren kann.

Es ist in Bezug auf die Grundlehre der Erfindung wichtig und sei betont, dass ein solch hoher Wert für die freie Siebfläche das kennzeichnende Merkmal der neuen Ausführung des mehrteiligen Detektors ist. Die freien Siebflächen der Metallgitter liegen normalerweise vorwiegend im Bereich zwischen 25 % und 50 %. Sehr selten, z. B. in einem Gitter 1 aus einem Draht mit 1 mm großen Durchmesser beträgt die lichte Maschengröße 9 mm und die freie Siebfläche 81,90 %. Aber, wie nachfolgend erklärt wird, sind solche Großstrukturgitter für die Erfindung aufgrund der niedrigen Auflösung des reproduzierten Detektors schlecht geeignet.

Das Gitter wird gewöhnlich gerollt geliefert, d.h. seine Bahn ist zu einem Zylinder gewickelt. Nach dem Abwickeln richtet sich das Gitter gerade auf und die Arbeitsbahnen werden daraus geschnitten. Die Abmessungen dieser Bahnen hängen von der Art der Röntgenologie-Kontrolle ab, für die der mehrteilige Detektor geplant ist. Im Rahmen der Arbeit an der Erfindung wurden zu Testzwecken aufgrund der durchgeführten Prüfungen Gitterelemente mit lichten Maßen 64*64 Elemente, 128*128 Elemente, 256*256 Elemente 512*512 Elemente und 1024*1024 Elementen gewählt.

Dementsprechend betrugen die linearen Abmessungen dieser Elemente für das genannte Gitter N20 25,6*25,6 Millimeter. Die gesamte freie Siebfläche war S=25,6*25,6*0,64=419,43 mm$^2$. Auf die gleiche Weise werden die Maschengrößen und die freien Siebflächen für alle gewählten Testelemente berechnet.

Während der Arbeit an der Erfindung wurde nachgewiesen, dass zwei Parameter die Kriterien für die Optimierung der Parameter des benutzten Gitters darstellen:

- die maximale freie Siebfläche in Prozent und
- die optimale Anzahl der Kettfadenlinien pro 1 laufenden mm der Gitterlänge.

Unter Berücksichtigung dieser Anforderungen kann eine hohe Auflösung des Detektors von 3 Linienpaaren pro Millimeter erreicht werden.

Das ist ein wesentlicher Vorteil des neuen Detektors. Dieser ist **dadurch gekennzeichnet, dass** zur Herstellung von einer mehrteiligen Zellenstruktur der röntgenstrahlenempfindlichen Schicht des Detektors metallene gewebte, gewickelte bzw. galvanische Netzbahnen verwendet werden. Ihre freie Siebfläche beträgt über 48 % und vorwiegend über 61 %. Dabei beträgt die Menge der Drähte pro Längeneinheit des Trägers über 3 Stück pro Millimeter.

Die Analyse der industriellen Warenkataloge in Bezug auf gewebte Metallgitter ergibt, dass der Grenzwert für die freie Siebfläche bei 60-64 % und die Anzahl der Kettfadenlinien bei 2 bis 4 liegt. Gemäß der Erfindung wurde ein Messschema zur Bestimmung der Informations- und Helligkeitsparameter des mehrteiligen Detektors vorgeschlagen.

Dieses Schema umfasst eine Röntgenstrahlenquelle, Test-Objekte in Form von des Metallgitterelementen, deren Drähte verschiedene Querschnitte haben, und Elemente des Detektors mit Leuchtstoff. Die Röntgenstrahlungsenergie betrug während der Tests 45 keV. Die quantitativen Kenndaten wurden in Form von einer Wahlmatrix ermittelt. Die Wahlmatrix enthielt die Messdaten über die Leuchtdichte der Innenfläche von Szintillator und die Längenabmessung für die Übergangsgrenze des Bildfeldes zwischen Schwarz- und Hellfeld.

Es wurden zahlenmäßig folgende Gesetzmäßigkeit für den neuen Szintillator festgestellt:

- die Leuchtdichte ist bei gleichem Durchmesser des Metalldrahtes zur freien Siebfläche des Metallgitters proportional;
- die Strahlenintensität des Szintillators nimmt beim gleichen Drahtdurchmesser mit der Anzahl der Metallgitterwindungen pro 1 Millimeter ab;
- die Vergrößerung der Anzahl der Metallgitterwindungen erhöht die Intensität des Hintergrundrauschens des Indikatorfeldes.

Somit werden folgende Gitterarten zur Herstellung des mehrteiligen Detektors vorgeschlagen:

- gewebte Gitter aus verschiedenen Materialien; darunter nichtrostender Stahl dessen Hauptelement Eisen Fe mit der Atomnummer 24 sowie Messing, Bronze bzw. Tombak, dessen Hauptelement Kupfer mit der Atomnummer 29 ist;
- galvanische Gitter; das Hauptelement der Gitterbahn ist Nickel Ni mit der Atomnummer 28;
- gewickelte Gitter aus sehr feinem Wolframdraht; das Hauptelement ist Wolfram W mit der Atomnummer 74.

Alle Gitterarten sind in Bezug auf ihre mechanischen und optischen Eigenschaften in Tabelle 2 zusammengefasst.

Tabelle 2

| Gitterart | Material | Atomnummer | Gittergröße (Anzahl der Windungen pro mm) | Freie Siebfläche, % | Festigkeit, % |
|---|---|---|---|---|---|
| Gewebt | Nirosta | 26 | 2-4 | bis 64 % | 100 |
| | Bronze | 29 | | | |
| Galvanisch | Nickel | 28 | 20-40 | bis 80 % | 50 |
| Gewickelt | Wolfram | 74 | 40-60 | bis 85 % | 200 |

Während der Arbeit an der Erfindung wurde festgestellt: Alle neuen metallenen Netzbahnen ermöglichen eine 1,5- bis 2-fache Erhöhung des Bildkontrastes. Die gewickelten Wolframgitter weisen die 2,5- bis 3-fache Steigerung dieses Kennwertes auf.

Die genannten Vorteile in Bezug auf die Kontraststeigerung werden in einem Detektor erreicht, der dadurch gekennzeichnet ist, dass als Metallgitterbahnen gewebte Netze aus nichtrostendem Stahl, Nickel, Bronze mit einer freien Siebfläche bis 64 % sowie gewickelte Netze aus feinem Wolframdraht mit einer freien Siebfläche bis 85 % verwendet werden.

Zu den röntgenstrahlenempfindlichen Leuchtstoffen für den Detektor ist auszuführen: Zur Herstellung der aus der Fachliteratur bekannten Detektoren wurden üblicherweise Einphasen-Leuchtstoffbeschichtungen verwendet wie z. B. säulenförmige CsJ:TI-Bildschirme. Diese werden normalerweise anhand der Vakuumverfahren hergestellt. Nach diesem Verfahren wird das Material, normalerweise Zäsiumjodid CsJ mit max. 5% Thalliumjodidlegierung TIJ, mittels thermischen Aufdampfens auf eine Unterlage aufgetragen. Die Lichtleitung, d.h. die vorwiegende Lichtemissionsausbreitung, stellte einen beachtlichen Unterschied zwischen den Brechungszahlen von Zäsiumjodid (n≈2) und vom Medium, normalerweise atmosphärischer Luft (n≈1) dar. Ein solcher zweifacher Unterschied zwischen den Brechungszahlen ermöglichte es, die Lichtleitung bei Elementen mit einer geometrischen Höhe bis zu 40-50 μm zu erreichen. Der Mangel dieser säulenförmigen Ausführung des Detektors ist eine große Menge an Gasbläschen und Mikroeinschlüssen, die beim Auftragen entstehen.

Gemäß der Erfindung wird eine andere Ausführung des Detektors vorgeschlagen. Das Fehlen der optischen Wechselwirkung zwischen den Elementen der röntgenstrahlenempfindlichen Schicht ist hier dadurch sichergestellt, dass jedes solche Element dieser Schicht in eine es umschließende Hülle aus Metallgitterwindungen eingeschlossen wird. Gemäß der vorgeschlagenen Ausgestaltung des Detektors wird zwischen den Leuchtkörnern ein lichtdurchlässiger Kunststoff angeordnet. Sein Volumen beträgt erfahrungsgemäß mehr als 60 %. Es wurde festgestellt, dass der minimale Lichtleitungseffekt im vorgeschlagenen Detektor durch einen heterophasen Schichtencharakter sichergestellt wird. Dieser Effekt hängt mit dem wesentlichen Unterschied zwischen den Brechungszahlen der Röntgenleuchtstoffkörner und des Kunststoffbindemittels zusammen. Es wurde auch bemerkt, dass das Brechungszahlenverhältnis der Leuchtstoffkörner und des Kunststoff im vorgeschlagenen röntgenstrahlenempfindlichen Detektor im Bereich von $1,2 < n_{Leuchtstoff}$ / $n_{Kunststoff} \leq 1,6$ liegen sollte.

Die Körner des neuen Leuchtstoffes stellen Oxysulfide von Gadolinium, Lutetium, Europium dar. Ihre Brechungszahl liegt bei n=2,2. Aus diesem Grund wird die obere Grenze dieser Ungleichung durch die optischen Eigenschaften der bekannten Kunststoffe festgelegt, die normalerweise eine niedrige Brechungszahl aufweisen. So hat Methylmethakrilat n = 1,45, die verbreiteten Silikone haben n = 1,45 - 1,55 und die optischen Epoxidharze n = 1,56. Gemäß der Erfindung wird strahlungsfestes Polykarbonat verwendet. Seine Brechungszahl ist n = 1,59 - 1,60. Seine optische Transparenz für das sichtbare Spektrum beträgt 91-92 %. In diesem Fall steigt die Lichtemissionsausbreitung in einem Heterophasen-Medium aus Polykarbonat und Röntgenleuchtstoff 2,3-fach und bei einer optimalen Leuchtstoffkonzentration sogar 2,8-fach an.

Dieser wesentliche Vorteil der röntgenstrahlenempfindlichen Schicht wird in einem Detektor erreicht, welcher dadurch gekennzeichnet ist, dass sein Dispersionsmedium aus Polykarbonat mit einer Brechungszahl n = 1,59 - 1,60 besteht, und dass dieses Dispersionsmedium die disperse Phase aus Seltenerd-Röntgenleuchtstoff mit einer Brechungszahl von n=2,2 umhüllt.

Während der Arbeit an der Erfindung wurde auch festgestellt, dass die Steigerung der Volumenkonzentration von Kunststoff im Heterophasen-Material des Detektors einen zusätzlichen Lichtleitungseffekt bzw. Kanalleitungseffekt für die Leuchtstoffstrahlung sicherstellt. Jedoch ist die beachtliche - über 75-80 % - Volumenkonzentrationszunahme für den Kunststoff im Heterophasen-Medium äußerst unerwünscht. Das ist dadurch bedingt, dass die Volumenkonzentrationszunahme des Kunststoffes im Heterophasen-Detektor von einer wesentlichen Abnahme der Leuchtdichte bei Elementen des Detektors während ihrer Röntgenerregung begleitet wird. Die Tabelle 3 enthält Angaben über den Einfluss der Volumenkonzentration des lichtdurchlässigen Kunststoffes auf die Strahlungsintensität des Detektors. Daraus folgt, dass die optimale Konzentration für die Herstellung der röntgenstrahlenempfindlichen Schicht 20 bis 60 % beträgt.

Tabelle 3

| Kenndaten des Detektors | Kunststoffkonzentration , % | | | | | | | |
|---|---|---|---|---|---|---|---|---|
| | 10 | 20 | 30 | 40 | 50 | 60 | 70 | 80 |
| Strahlenintensität, % | 200 | 180 | 160 | 140 | 120 | 100 | 80 | 60 |
| Möglicher optischer Abstand, mm | 40 | 60 | 80 | 100 | 120 | 140 | 160 | 200 |

Zum Verfahren zur Herstellung der Detektionsbeschichtung ist auszuführen: Die Fachliteratur beschreibt einige Möglichkeiten zur Herstellung von mehrteiligen Röntgenstrahlungsdetektoren.

Als erstes sei das Extrusionsverfahren erwähnt. Nach diesem Verfahren werden Superkonzentrate auf der Basis einer Mischung aus granuliertem Niederdruckpolyäthylen und Leuchtstoffkörnern hergestellt. Diese enthalten bis zu 20 % (Gew.) Leuchtstoff. Danach wird dieses granulierte Konzentrat in einem speziellen Einschneckenextruder zu einem feinen Polyäthylenfilm verarbeitet. Der Film wird nachher bei einer Temperatur von T= 130- 160˚ C in die kammförmigen Strukturen des Detektors eingeschmolzen, wobei die erforderlichen Vertiefungen entstehen, die für die Diskontinuität der erzeugten Schicht sorgen.

Trotz der breiten Anwendung dieses bekannten Verfahrens weist es auch wesentliche Mängel auf. Diese sind dadurch bedingt, dass das Leuchtmaterial zweimal in der erwärmten Polyäthylen-Schmelze erhitzt wird. Das wird normalerweise von der Oxidation der Röntgenleuchtstoffoberfläche begleitet. Dabei entsteht auf der Oberfläche ein dünner Film von Oxydsulfat $Gd_2O_2SO_4$. Die Oxydsulfate verursachen strahlungslose Rekombinationen und vermindern die Effektivität der Umwandlung der Röntgenstrahlung in sichtbares Licht. Um diesen wesentlichen Nachteil des bekannten Verfahrens zu beseitigen, wurde gemäß der Erfindung ein Spritzgussverfahren zur Detektorherstellung entwickelt.

Die kennzeichnenden Merkmale des Spritzgussverfahrens zur Ausbildung des Detektors sind wie folgt:

- die Anwendung einer speziellen Suspension auf der Basis einer molekularen Lösung von Polykarbonat und Leuchtstoffkörnern;
- die Anwendung einer Verteilerdüse zur präzisen Dosierung von Leuchtstoff- Suspension beim Setzen auf die Netzbahn des Detektors;
- die Anwendung von einem beweglichen kontinuierlichen Band mit der gewählten auf seiner Oberfläche im Voraus befestigten Netzbahn;
- die Anwendung eines Verfahrens zur IR-Trocknung der gegossenen Heterophasen-Kunststoffbeschichtung, wobei die IR-Strahlung die gesamte Dicke der Beschichtung durchdringt.

Die auf solche Weise hergestellte Beschichtung weist eine strickt vorgegebene Sollstärke von z.B. 40 bis 120 $\mu$m auf.

Dieser wesentliche Vorteil wird in einer röntgenstrahlenempfindlichen Beschichtung des Detektors erreicht, welcher dadurch gekennzeichnet ist, dass bei seiner Fertigung ein Spritzgussverfahren eingesetzt wird. Bei diesem Verfahren wird eine flüssige Röntgenleuchtstoff-Suspension in der Lösung eines Plastikbinders verteilt. Als solcher Kunststoff wird Polykarbonat mit einer Molekülmasse M = 10000 - 15000 Kohlenstoffeinheiten verwendet. Der Kunststoff wird in einem organischen niedrigsiedenden Lösungsmittel, z. B. Methylenchlorid, aufgelöst. Der Pulver-Röntgenleuchtstoffgehalt in der Suspension beträgt dabei 20 bis 40 % (Gew.) der Kunststoffmasse.

Es wird vorgeschlagen, als Kunststoffbinder spezielles strahlungsbeständiges Polykarbonat mit charakteristischen Gruppen (C-O-C-O) mit einem Polymerisationsgrad von n= 150 - 250 und einer Molekülmasse von M = 10000 - 15000 Kohlenstoffeinheiten zu benutzen. Die Granulate von diesem Kunststoff wurden in einem organischen chlorhaltigen Lösemittel, z.B. Methylenchlorid $CH_2Cl_2$ bei einer Siedetemperatur von $T_s=40,1°$ C aufgelöst. Die primäre Suspension zum Gießen wurde mit Hilfe von einem speziellen Mischer vorbereitet. Das Methylendichlorid- zu dem Polykarbonat-Verhältnis betrug 1:1. Dieses Verhältnis stellte eine erforderliche Zähigkeit der Lösung von 10 bis 25 cP sicher. Die Lösung wurde dann mit einem gepulverten Leuchtstoff in der Menge von 20 bis 65 % (Gew.) in Bezug auf die Konzentration des Ausgangspolykarbonats ergänzt.

Um Testgußstücke des mehrteiligen Detektors zu bekommen, wurden 50 g granuliertes Polykarbonat, 50 g $CH_2Cl_2$ und 20 g Leuchtstoffkörner verwendet. Die Zähigkeit der Suspension betrug 18-20 cP. Die Suspension wurde in eine kegelförmige Düse aus nichtrostendem Stahl gesetzt. Der Düsenumfang betrug 150 $cm^3$. Die Düse hatte einen mittels Feinstellschrauben einstellbaren Spalt, durch den die Kunststoffsuspension auf die metallene Gitterbahn durchströmte. Die Stärke der gegossenen Beschichtung war von der Menge der durchströmenden Suspension sowie von der Bewegungsgeschwindigkeit des kontinuierlichen Bandes mit der auf seiner Oberfläche befestigten Metallgitterbahn abhängig. Es wurde festgestellt, dass die Gussstärke im Bereich von 20 $\mu$m (ca. 20 % des benutzten Drahtdurchmessers in der Netzbahn) bis 100 $\mu$m pro einen Banddurchgang unter der Düse hergestellt werden kann. Wenn die Stärke des gebildeten Detektors vergrößert werden muss, so sollte der Spritzgussablauf zur Herstellung der Beschichtung zweimal wiederholt werden. Dabei sollte die primäre Beschichtung vor dem zweiten Auftragsdurchgang einer Polymerisation bei T =110- 120° C 30 Minuten lang ausgesetzt werden.

Die wichtige Besonderheit des Spritzgussverfahrens zur Ausbildung der Detektions-Leuchtstoffbeschichtung unmittelbar im Umfang der Netzbahn ist die Aufrechterhaltung einer hohen Flexibilität der gesamten Konstruktion des Detektors, welcher eine Netzbahn mit den in jeder der Netzmaschen sitzenden röntgenstrahlenempfindlichen Elementen des Detektors enthält.

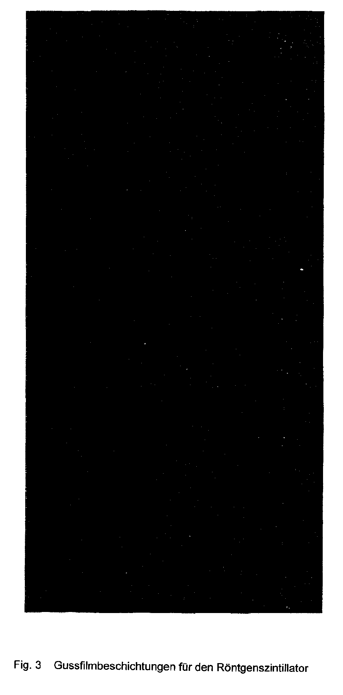

Die Fig. 3 zeigt verschiedene Testelemente der Detektorelemente. Es wurden Detektionsbeschichtung auf Netzbahnen mit einer Drahtstärke von 100 $\mu$m, 120 $\mu$m, 150 und 200 $\mu$m hergestellt.

Die Leuchtstoffstärke der mehrteiligen Beschichtung in einer Netzbahn variierte von $\delta=40$ $\mu$m bis $\delta=120$ $\mu$m.

Die Vollbelastung der Detektionsschicht in Bezug auf den Leuchtstoff betrug dabei m=20 mg/$cm^2$ bis m=80 mg/$cm^2$. Das reichte dafür aus, eine primäre Röntgenstrahlungsenergie von E=20 keV bis E=85-90 keV aufzunehmen. Die Höhe der mehrteiligen Detektionsbeschichtung betrug ab 80 % der Stärke der Netzbahn (bei vollständiger Ausfüllung) bis 30 % der Vollstärke. Dabei war die innere Oberfläche mit einer Vertiefung versehen. Die äußere Oberfläche war praktisch eben ohne jegliche Vertiefungen und stand im Kontakt mit der Si-Fotodioden-Schicht.

Zu der neuen Zusammensetzung des Röntgenleuchtstoffes für den Detektor ist auszuführen:

Die nächste Aufgabe der Erfindung ist die Ermittlung der optimalen Zusammensetzung des Röntgenleuchtstoffes. Gemäß den Angaben aus Fig. 1 und zwar gemäß den K-Sprung-Größen an den inneren Atomumlaufbahnen muss das Material solche chemische Elemente enthalten, deren innere Elektronen an den K-Umlaufbahnen die Bindungsenergie von $E_K=40$ keV bis $E_K=70$ keV aufweisen. Als solche Elemente für die Ausbildung der Matrix (des Trägers) für den neuen Leuchtstoff wurden folgende Elemente getestet: Gadolinium Gd mit einer K-Sprung-Energie von E=56 keV, sowie Lutetium Lu mit einer K-Sprung-Energie von E=61 keV. Dazwischen stehen die Elemente Europium Eu mit einer K-Sprung-Energie von E=54 keV und Samarium Sm mit einer K-Sprung-Energie von E=57 keV. Als zusätzliches Absorbtions-Element wurde für die Leuchtstoffmatrix Bi mit der Atomnummer N=83 vorgeschlagen. Sein Oxid weist eine hohe Gravitationsdichte von p = 8,9 g/$cm^3$ auf und wird dazu beitragen, den Höchstwert der Energieleistung unter hohen Energien des Erregungselektronenbündels auf E=120 keV zu steigern. Es wird auch vorgeschlagen, den Leuchtstoff mit kleinen Mengen von Rheniumoxiden $Re_2O_7$ mit einer Dichte von $\rho$ = 8,2 g/$cm^3$ als Energiewandler zu ergänzen.

Es wird vorgeschlagen, als Hauption des Anionensubgitters des Leuchtstoffes Sauerstoff O mit einer K-Sprung-Energie von E= 12 keV zu verwenden. Während der Arbeit an der Erfindung wurde nachgewiesen, dass neben den S- bzw. Se-Ionen (K-Sprung-Energie =30 keV) auch Ionen von F, Cl, Br (N=35, K-Sprung-Energie = 37 keV) und Jod I (N=53, K-Sprung-Energie = 46 keV) als Energiewandler (Zusatzstoffe, die für die Erhöhung der vollständigen Energieausbeute sorgen) für den Röntgenleuchtstoff dienen können.

Somit wird folgende Zusammensetzung für den röntgenstrahlenempfindlichen Leuchtstoff vorgeschlagen: Oxid-Reihe $Gd_2O_3$, $Lu_2O_3$, $Eu_2O_3$, $Dy_2O_3$, $Bi_2O_3$, $Re_2O_7$ für das Kation-Subgitter und Ionen-Reihe $O^{-2}$, $S^{-2}$, $Se^{-2}$, F, Cl,

Br$^{-1}$, J$^{-1}$ für das Anionen-Subgitter.

Den kristallchemischen Eigenschaften nach liegen der vorgeschlagenen Zusammensetzung der Ionen die Mehrligandoxidsulfoselenide am nächsten, die zusätzlich durch Ligandenionen aus der Gruppe F$^{-1}$, Cl$^{-1}$, Br$^{-1}$, J$^{-1}$, N$^{-3}$ ergänzt wurden.

Die vorgeschlagene Zusammensetzung des Röntgenleuchtstoffes stellt eine Energieeffizienz bis 24 % (absolut) für die Anfangsenergie des Röntgenbündels von 80 keV bei verringerter Stärke sicher. Das Emissionsspektrum des vorgeschlagenen Leuchtstoffes liegt im roten sichtbaren Spektralgebiet und ist an das Empfindlichkeitsspektrum der Si-Fotozellen optimal angepasst. Deswegen generieren die Si-Fotozellen ein strommäßig 1,8-2-fach stärkeres Signal.

Dieser wesentliche Vorteil wird in einem Detektor mit Röntgenleuchtstoff erreicht, welcher **dadurch gekennzeichnet, dass** der vorgeschlagene Röntgenleuchtstoff folgende stöchiometrische Formel aufweist:

$$(\Sigma Me)_2 O_{2-x} (\Sigma Hal)_{x/2} N^{-3}{}_{x/2} S_{1+y}$$

wobei $\Sigma Me$ = Gd und/oder Lu und/oder Dy und/oder Eu und/oder Bi und/oder Re ist.

$\Sigma Hal = F^{-1}$ und/oder Cl$^{-1}$ und/oder Br$^{-1}$ und/oder J$^{-1}$, und die stöchiometrischen Indexgrößen im Bereich $0,01 < x \leq 0,08$, $0,001 \leq y \leq 0,01$ liegen.

Die durchschnittliche Atomnummer für den vorgeschlagenen Röntgenleuchtstoff ist N=69 Einheiten, wenn der Leuchtstoffträger Gadolinium (bis 50 % Atomeinheiten), Lutetium (bis 42 % Atomeinheiten), Europium (bis 6 % Atomeinheiten), eine Summe von Dysprosium, Wismut und Rhenium (bis 2 % Atomeinheiten) enthält. Der erfahrungsgemäße Messwert für die effektive Dichte beträgt $\rho = 8,3\text{-}8,5$ g/cm$^3$.

Zum Verfahren zur Herstellung des Röntgenleuchtstoffes ist auszuführen:

Setzt sich das vorgeschlagene Material aus mehr als 10 Elementen zusammen, so muss ein solches Verfahren zur Herstellung dieses Materials vorgeschlagen werden, welches die Inhomogenität des Produktes in Bezug auf die Konzentration der Bestandelemente ausschließt. Es muss auch möglich sein, innerhalb einer kurzen Zeit eine Verbindung zu synthetisieren, welche alle erforderlichen chemischen Elemente einschließt, wobei die notwendige chemische Beständigkeit sowie die allgemeine Beständigkeit der Verbindung sichergestellt wird.

Es sei bemerkt, dass als Hauptverfahren zur Herstellung von Leuchtstoff und zwar zur Herstellung der aus dem Stand der Technik bekannten Materialien sowie des Prototypmaterials entweder ein thermisches Aufdampfen oder eine chemische einstufige Herstellung von Gadolinium-Oxidsulfid aus einer Schmelze eingesetzt wird. Im ersten Fall handelt es sich dabei um das Aufdampfen von säulenförmigen Fadenkristallen vom Typ CsJ:Tl, im zweiten Fall um eine der Ausgestaltungen für die Gd$_2$O$_2$S:Tb-Erzeugung.

Als Prototyp wird auch das Schmelzverfahren zur Herstellung des neuen Röntgenleuchtstoffes vorgeschlagen, welcher aus Seltenerdionen und Ionen mit d-Hülsen (Bi, Re, Br$^{-1}$ und J$^{-1}$) besteht. Dieses Verfahren ist **dadurch gekennzeichnet, dass** der Synthesevorgang in zwei Stufen verläuft. In der ersten Stufe entstehen dabei Oxyhalogenide der Elemente, die eine Kation-Untergruppe bilden. Dies erfolgt durch die Wechselwirkung der mitgefällten Ausgangsoxide der Seltenerdmetalle, Bi und Re mit den Ammoniumhalogeniden bei einer Temperatur von T=400˚ C bis T=700˚ C im Laufe von 1 bis 4 Stunden. Danach wird das erzeugte Produkt erneut in der Schmelze von alkalischen Chalkogeniden bei einem Molekularverhältnis von 1:1 bis 1:3 bei Temperaturen von T=800˚ C bis T=1200˚ C im Laufe von 2 bis 8 Stunden warmebehandelt. Danach wird das hergestellte Produkt mit Wasser und Mineralsäurelösungen herausgelöst.

Somit ist das kennzeichnende Merkmal des neuen Verfahrens zur Herstellung von Seltenerd-Röntgenleuchtstoff eine zeit- und temperaturmäßige Mehrstufigkeit unter Einsatz von unterschiedlichen chemischen Reagenzien in jeder Stufe des gesamten Herstellungsvorgangs.

Als Beispiele für den neuen Röntgenleuchtstoff sind der Tabelle 4 die Zusammensetzungen der Werkstoffe zu entnehmen, welche zur Anwendung gemäß der Erfindung vorgeschlagen werden.

Tabelle 4

| Zusammensetzung des Kation-Subgitters | Anionen-Subgitter | Strahlung $\Lambda_{max}$, nm | Energie-wirkungsgrad, % | Nachleucht-dauer, mSek | $d_{50}$ |
|---|---|---|---|---|---|
| Gd$_{0,4}$Lu$_{0,5}$Eu$_{0,1}$ | O,S | 626,707 | 20 | 3 | 8-9 |
| Gd$_{0,3}$Lu$_{0,55}$Bi$_{0,05}$Eu$_{0,1}$ | O,Br,S | 626,708 | 21,5 | 2.6 | 6-10 |
| Gd$_{0,3}$Lu$_{0,55}$Re$_{0,05}$Eu$_{0,08}$Sm$_{0,2}$ | O,J,S | 626,708 | 22 | 3.2 | 8-12 |
| Gd$_{0,5}$Lu$_{0,35}$Bi$_{0,05}$Eu$_{0,09}$Sm$_{0,01}$ | O,J,S,Se,Br | 628,710 | 24,8 | 3.4 | 8-12 |

(continued)

| Zusammensetzung des Kation-Subgitters | Anionen-Subgitter | Strahlung $\Lambda_{max}$, nm | Energie-wirkungsgrad, % | Nachleucht-dauer, mSek | $d_{50}$ |
|---|---|---|---|---|---|
| $Gd_2O_2S$:Tb | S | 545 | 14-18 | 3 | 6 |

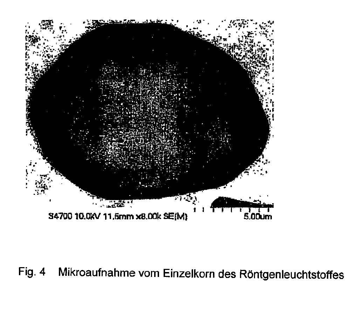

Das besondere Merkmal des neuen Synthese-Vorgangs ist die Erzeugung einer räumlichen Körnermorphologie des Seltenerd- Röntgenleuchtstoffes. Eine der Ausgestaltungen solcher Körner ist in Fig. 4 dargestellt. Daraus folgt eine hohe Homogenitat der erzeugten Körner sowie ihre hohe optische Transparenz und Gleichachsigkeit.

Um die Wetterbeständigkeit auf der Oberfläche der Körner des neuen Röntgenleuchtstoffes zu verbessern, wird eine dünne lichtdurchlässige Beschichtung auf der Basis von Zinksilikat $ZnO \cdot SiO_2$ gebildet. Diese Beschichtung ist 40 nm bis 100 nm stark. Diese vollflächige Beschichtung sorgt für den Schutz der Körner gegen eine Wechselwirkung mit $H_2O$ und aktiven Gasen. Darüber hinaus stellt das Vorhandensein von diesem Zinksilikatfilm eine gute Schüttfähigkeit des gepulverten Röntgenleuchtstoffes sicher und verhindert die Bildung von Sinterungsprodukten aus zwei und mehr Partikeln.

Während der Arbeit an der Erfindung wurde eine spezielle Methode getestet, um die mögliche Menge von gekoppelten Körnern im Umfang des körnigen Produktes zu ermitteln. Nach dieser Methode wird der Umfang der Körner im Leuchtstoffpulver mit einer bestimmten Masse gemessen. Zwecks höherer Reproduzierbarkeit wird die in einen speziellen geeichten Zylinder gefüllte Leuchtstoffmasse periodisch mit einer Frequenz bis 5 Hz im Laufe von 5 Minuten geschüttelt. Der dabei hergestellte Umfang der Röntgenleuchtstoffpulverschicht stellt eine Funktion der chemischen Zusammensetzung des Trägers sowie der Geometrie der Werkstoffkörner und der darin fehlenden Sinterungsprodukte dar. Das spezifische Volumen des Röntgenleuchtstoffes mit der Zusammensetzung $(Gd_{0,3}Lu_{0,55}Bi_{0,05}Eu_{0,01})_{1,9}O_{1,9}(B, J)_{0,1}(S,Se)_1$ betrug gemäß der neuen Ermittlungsmethode p=4,8-4,9 g/cm$^3$. Das ist ein beachtlicher Wert gegenüber der theoretisch abgeschätzten Röntgenleuchtstoffdichte von p = 8,3-8,5 g/cm$^3$.

Der genannte Vorteil der hohen Schüttdichte des neuen Röntgenleuchtstoffes wird in einem Detektor erreicht, welcher sich durch das Vorhandensein von sehr dichten mit Röntgenleuchtstoff gefüllten Heterophasen-Schichten mit einer Fülldichte von 40 bis 120 mg/cm$^2$ auszeichnet.

Die somit erreichten hohen Schüttdichten für den Röntgenleuchtstoff ermöglichen es auch, die integrale Leuchtdichte des mehrteiligen Detektors der Röntgenbilder zu steigern. Die bei einer Röntgenbündelenergie von 80 keV gemessene Integralhelligkeit der Schicht war höher als 4 Candela/m$^2$.

Die Ausgestaltung der Fotodioden-Matrix ist auszuführen.

Der nächste Bestandteil der Ausführung der neuen Einrichtung sind Fotodioden, welche in Form einer elektrischen Matrix zusammengebunden sind und n Zeilen und m Spalten aufweisen. Die "n" und "m"-Größen werden je nach der Größe des Objektes für die Röntgenuntersuchung gewählt. So wurde festgestellt, dass für eine lokale Zähneuntersuchung eine Röntgenmatrix mit n=64 und m=64 ausreicht. Eine Matrix mit 256*256 Elementen deckt praktisch vollständig den Bedarf in der Zahnheilkunde ab. Solche Matrizen mit 256*256 bis 512*512 Elementen können auch in der Mammologie verwendet werden. Die 1024*1024 großen Matrizen sind auch für andere Untersuchungen geeignet. Matrizen mit gleicher und noch höherer Anzahl der Elemente sind auch für die meisten Röntgenologie-Forschungen bei der Behandlung von Kindern im Alter bis 10 Jahre geeignet. Die größten Matrizen mit 3072*3072 Elementen (quadratisch), 2048*4096 (rechteckig) werden zur Erkennung von Pathologien bei erwachsenen Patienten angewendet. Das gesamte Blickfeld unter Anwendung solcher Großbildmatrizen beträgt ca. 440*440 mm. Das ist wesentlich größer als bei elektronischen Röntgenbildwandler erhältlichen Felder (200*200 mm).

In der Einleitung zur Erfindung ist bereits erwähnt, dass die lichtempfindlichen Elemente in der Form einer Matrix aus verschiedenen chemischen Elementen gebildet werden können. Die ersten digitalen Matrix-Detektoren für Röntgenologie enthielten lichtempfindliche Matrizen auf der Basis von elementarem Selen Se. Dieses Material lässt sich leicht unter Vakuum verdampfen ($T_{Verdampf} \approx 600°$ C) und ermöglicht, verschiedene Strukturen mittels Rasteraufspritzens mit einer hohen Genauigkeit bis zu 2000 Elemente pro Seite zu erzeugen. Die Technologien auf der Basis von selenhaltigen Matrizen sind zwar gründlich durchgearbeitet, aber sie haben einige wesentliche Nachteile, darunter die integrale lichtelektrische Empfindlichkeit, die einige Lux pro 1 cm$^2$ beträgt. Dies setzt voraus, dass der Röntgenleuchtstoff sehr viel Licht ausstrahlen muss. Die andererseits niedrige Empfindlichkeit der Selenschicht bedurfte hoher Arbeitsstromwerte in den Röntgenröhren (Strahler) und führte folglich zur Überbestrahlung der Patienten.

Ein wichtiger Schritt vorwärts war die Umstellung auf elementares Silizium bei der Herstellung von mehrteiligen Detektoren. Ursprünglich wurden dabei die Systeme mit optischer Bildübertragung eingesetzt. Deswegen mussten Matrizen mit CCD-Elementen verwendet werden. Ihre Empfindlichkeit betrug bis 10$^{-4}$ Lux pro Element. Jedoch konnten solche hohen Empfindlichkeitswerte nur anhand der monokristallinen Silizium-Elemente erreicht werden. Das zählte sich wirtschaftlich überhaupt nicht aus und war auch bei großflächigen Detektoren verfahrenstechnisch nicht machbar.

Mit der weiteren Entwicklung der LSD-Schirmtechnik mit aktiven Matrizen bot sich die Möglichkeit, polykristalline und sogar amorphe Filmbeschichtungen auf Silizium-Basis zu benutzen. Sowohl die Verfahren für ihre Herstellung als auch ihre Eigenschaften waren sehr unterschiedlich und werden im Weiteren eingehend betrachtet.

Als erstes sei das Verfahren zur Herstellung eines neuen Detektors auf der Basis einer Si-Matrix beschrieben. Als Prototyp wurden die Daten der Fa. Scint-x (Scintillator technology) benutzt. Der Fertigungsvorgang umfasst sechs Stufen:

1. Stufe - Oberflächenoxidation der primären polykristallinen Beschichtung. Die Oxidation wird unter Sauerstoff durchgeführt. Der Vorgang wird durch eine $O_2$-Gasentladungsplasma unter einem Druck von p=10 mm Hg ausgelöst. Die Stärke des gebildeten $SiO_2$-Films auf der Oberfläche von polykristallinem Silizium beträgt 6=250 nm bis δ=1,5 μm.

Die zweite Stufe ist die Fotolithografie auf der Polysilizium-Oberfläche. Die primäre Fotoresist-Schicht wird auf die Oberfläche mittels Zentrifugierens aufgetragen. Nach der Polymerisation der Fotoresist-Schicht wird sie dank den im Schichtumfang vorhandenen Bestandteilen fotoempfindlich.

Während der Erhitzung der auf eine Platte gegossenen Fotoresist-Schicht gelingt es, sie dünner zu machen. Danach wird die Fotoresist-Schicht über ein verchromtes Negativ mittels einer starken UV- und Blauintensivbestrahlung belichtet. An den mit Licht betroffenen Stellen kommt eine Fotopolymerisation der Widerstandsschicht zustande und sie verwandelt sich in eine unlösliche Beschichtung. Der löslich gebliebene Teil der Fotoresist-Schicht wird in Form von einem Netz von der Oberfläche der Polysilizium-Platte entfernt. Somit bleiben nur polymerisierte Überreste der Fotoresist-Schicht auf der Platte übrig.

Die nächste Stufe ist die Aufbringung der Siliziumdioxid-Schicht. Dieser Vorgang verläuft normalerweise unter einer HF-Atmosphäre bzw. unter einem fluorierten Halogenwasserstoff-Plasma in speziellen Anlagen.

Der beim Atzen von Siliziumdioxid gebildete gasförmige $SiF_4$ lässt sich leicht entfernen. Somit werden in der Siliziumdioxidschicht Kanäle für weiteres direktes Atzen von Silizium aufgebracht.

Danach folgt das Atzen der Silizium-Beschichtungen. Dabei handelt es sich entweder um einen elektrochemischen Vorgang oder um das reaktive Ionentiefätzen (DRIE-Verfahren). Das primäre Siliziumdioxid dient dabei als eine Barriere, um das direkte Atzen des polykristallinen Siliziumfilms zu vermeiden. Die geätzten Kanäle und die räumliche Stellen im Polysilizium bilden dabei eine Lichtdetektor-Struktur des Szintillationsdetektors aus.

Die nächste Stufe (so die Angaben von "Scint-x") ist das Auftragen des Szintillati-onsstoffes auf die gebildete Struktur der mehrteiligen Silizium-Matrix. Gemäß einer der Ausgestaltungen der Erfindung wird vorgeschlagen, die Empfänger-Matrixschicht unmittelbar mit einer metallenen Netzbahn abzudecken, sie an der LichtdetektorMatrix zu befestigen und dann auf der so hergestellten Konstruktion eine Mehrelemente-Szintillationsschicht mittels Gussverfahrens zu bilden. Dafür wurde ein optimaler Kunststoff gewählt, welcher die Grundlage des Detektors darstellt. Wie bereits oben beschrieben, handelt es sich dabei um ein strahlungsbeständiges Polykarbonat. Dieser Kunststoff kann die Erhitzung bis T=400˚ C zerstörungsfrei aushalten. Ein wichtiger Vorteil von Polykarbonat ist seine hohe Strahlungsbeständigkeit gegenüber verschiedenen Arten der durchdringenden Strahlung, darunter auch der Röntgenstrahlung.

Die letzte Stufe bei der Bildung einer lichtempfindlichen Matrix nach Scint-x Angaben ist ihre Passivierung. Das heißt, Silizium wird mit einer Schutzschicht bedeckt, die für die Szintillator-Strahlung transparent ist.

Wenn beim vorgeschlagenen Gerät die Bildschärfe bei einem hohen Kontrastwert von besonders hoher Bedeutung sind, muss der verfahrenstechnische Ablauf ganz genau eingehalten werden. Das heißt, zunächst wird das Silizium-Matrixsystem zum Abgriff (Ablesen) des optischen Signals vorbereitet. Erst danach wird auf diesem System die mehrteilige Schicht von Strahlendetektoren ausgebildet. Um die Mittelpunkte der Silizium-Lichtdetektoren mit den Mittepunkten des röntgenstrahlenempfindlichen Szintillationsdetektors genau zur Deckung zu bringen, wird ein diagonales Dreipunkt-Koordinatenüberdeckungssystem eingesetzt. Nach diesem System werden drei herausragende Referenzpunkte auf der Silizium-Matrix nachgebildet. Anhand ihrer Mittelpunkte wird dann die Matrix mit der Netzbahn des Szintillationsdetektors in Deckung gebracht. Die Außenseite der Netzbahn wird dabei mit einer feinen Schicht von lichtdurchlässigem Klebstoff bedeckt, um die Überdeckung der Matrixbahn mit den Lichtdioden und der Drahtgitterbahn des Szintillationsdetektors zu fixieren. Das auf eine solche Weise zusammengebaute Paket wird nachher auf das bewegliche Band der Gussanlage gelegt. Die Polykarbonatsuspension von Röntgenleuchtstoff wird dann über die Düse der Gussanlage in die Maschen der Drahtgitterbahn gefüllt. Dabei weist der Detektor die erforderlichen Parameter in Bezug auf eine hohe Röntgenstrahlenempfindlichkeit und Helligkeit der Bildwiedergabe auf.

Die genannten kennzeichnenden Merkmale werden in einem mehrteiligen Detektor erreicht, welcher dadurch gekennzeichnet ist, dass die Bildung seiner röntgenstrahlenempfindlichen Schicht unmittelbar auf der Schicht der Silizium- Lichtzellen erfolgt. Darüber wird eine Metallgitterbahn so festgemacht, dass die optischen Mittelpunkte der Lichtzellen auf den Linien liegen, die über die Mittelpunkte des "freien Querschnittes" jeder Masche der Gitterbahn verlaufen.

Es wurde festgestellt, dass der Gussvorgang für Hochenergiesystem Szintillator - Detektoren mit vollständiger Stärke der Röntgenleuehtstoff-Heterophasenschicht zweckmäßig zwei bzw. dreimal mit einer Zwischenstufe für die Polymerisation der gegossenen Heterophasenschicht durchgeführt werden muss. Die dafür gewählten Polymerisationstemperaturen von T= 130-140˚ C beeinträchtigen die Integrität der Matrix mit Silizium-Lichtdetektoren nicht. Die Belastung für eine einfache Schicht beträgt (umgerechnet auf Röntgenleuchtstoff) m=20-25 mg/cm$^2$. Das entspricht der vollständigen Aufnahme der Röntgenstrahlung mit einer Primärenergie von E=40 keV. Bei wiederholter Ausbildung der Heterophasen-Szintillationsgussschicht mit einer Massenbelastung von m=20-25 mg/cm$^2$ wird die Schichtstärke dafür ausreichen, die primäre Strahlung mit E=80 keV aufzunehmen. Die dritte Auftragung der Schicht nach dem Spritzgussverfahren wird ihre äquivalente Schicht E= 120 keV sicher abdecken. Dies ist für die meisten Röntgenuntersuchungen auf dem Gebiet der Medizin und der Diagnostik ausreichend.

Die auf eine solche Weise hergestellte mehrlagige Silizium-Kunststoff-Szintillatorstruktur wird dann zum Testen vorbereitet. Dafür werden die Schaltleitungsführungen der Matrix mit Lichtdioden gereinigt. Zahlreiche Kontaktkabel werden zu Steckern zusammengefasst. Die Stecker werden an der Peripherie der Einrichtung in speziellen Anschlüssen befestigt.

Die Einrichtung wird an einer Siemens-Röntgenanlage vorgetestet. Die Quanten-energie der Röntgenstrahlung beträgt E=80 keV. Als spezielles Referenzstück wird eine metallene Kreisschablone benutzt, deren Kreisausschnitte Maschen mit verschiedenen Größen haben.

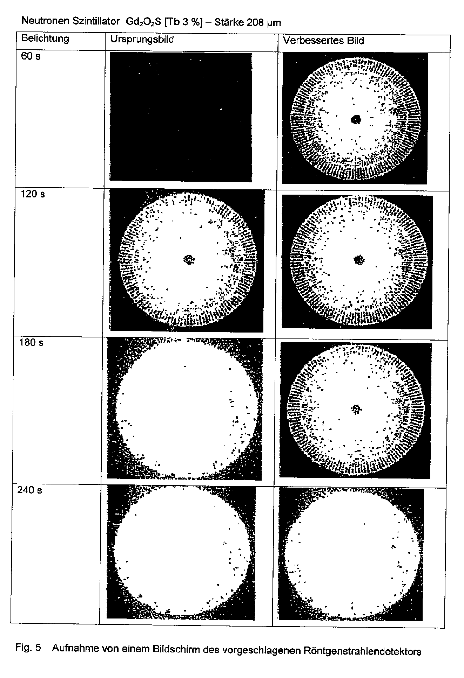

Fig. 5 enthält eine Aufnahme vom Bildschirm des neuen mehrteiligen Detektors, dessen Mittelkreisdurchmesser 120 mm beträgt. Aus dieser Aufnahme geht hervor, dass die Auflösung der vorgeschlagenen Konstruktion den Wert von 4 Linienpaaren pro 1 mm überschreitet.

Der gesamte Kontrastbereich der Einrichtung ist höher als 50 %. Die Optimierung der Zusammensetzung des Leuchtstoffes, seine Stärke und der Parameter der gewebten metallenen Gitterbahn bewirkt einen praktisch vollständigen Abgleich und bringt eine Verminderung der Helligkeit des Leuchthintergrundes des Geräts.

Der genannte Vorteil wird im neuen mehrteiligen Detektor erreicht, welcher dadurch gekennzeichnet ist, dass sein Bildkontrast 50 % bei einer Auflösung von über 4 Linienpaare pro 1 mm überschreitet. Solche Bilder ohne ein überlagertes unerwünschtes Störlicht sind in keiner aus dem Stand der Technik bekannten Druckschriften beschrieben.

Die Entwicklung und die Produktion des neuen Detektors gehören zu einem komplizierten verfahrenstechnischen Produktionsablauf bei der Herstellung von Qualitätserzeugnissen. Die Produktion der neuen Detektoren ist für 2010 geplant.

**Quellennachweis**

1. Image forming in roentgenography. Herausgegeben von B.Webb, Moskau, MIR, B.1, S. 346 (2000).
2. Tevtor A. Philips Tech Rev., B.14, SS.33-43 (1976).
3. Gurvich A.M., Malova A.M., Soschin N.P. UdSSR Erfinderzertifikat 457789 (21.02.1978)
4. Tomas A. et all. J.Electrochem.Soc., B.118, S.151 (1971).
5. Gurvich A.M., Soschin N.P. Izvestiya Acad. of Sciences of USSR, ser. Phys., B.41, S.1372-1379 (1977).
6. Zhitnik L., Tindo L. Patent RU 1569906 (06.07.1990)
7. Well S. The Proc. of Medical Imaging Institute of Phys. Bristol. G.B. (1992).
8. West P. et al. US Patent 5126573 (30.06.1992)
9. K. Yokota et al. US Patent 5302817 (12.04.1994).
10. Rocha J.G et al. IEEE Trans., V.6, B. 5, S.7803 (2002).
11. Rocha J.G. 14 European Conf. On Solid-State Transistors, B.2, S.27 (2000).
12. Keitchie A. et all. US Patent 2006/0033030A1 (12.07.2006)
13. Mollov N. US Patent 2005/028044A11 (26.06.2001)
14. Horotian S.G. US Patent 6252231B1 (26.05.2001).
15. Nagarkar V.V. et all. Nuclear Science. IEEE Transaction, V.50, B. 3, S.297 (2006).
16. Deok Jm.Jung et all. ETRI Journal, V.30, Heft 5, S.747 (2008).
17. Simon M. et all. Medical Phys., B.35, S.968-981 (2008).
18. Metallgitter. GOST 6613-86, 2002.

**Claims**

1. Mehrteiliger Röntgenstrahlendetektor mit einem flachen mehrteiligen Szintillator (1), der die auf die Außenfläche des Szintillators (1) einfallende Röntgenstrahlung in sichtbares Licht umwandelt, und mit einer Lichtdetektormatrix (7), die optisch mit der emittierenden Szintillator- Oberfläche im Kontakt steht und die von der Szintillator-Innenfläche emittierende optische Strahlung in ein elektrisches Signal umsetzt,

**dadurch gekennzeichnet,**

**dass** der genannte mehrteiligere Szintillator (1) des Detektors in Form von einem diskreten Satz von lumineszierenden in Maschen (3) eines Metallgitters (2) sitzenden Heterophasen-Elementen (4) ausgebildet ist, wobei das Metallgitter (2) aus einem röntgenstrahlungaufnehmenden und lichtreflektierenden Metall besteht, und wobei das Rastermaß, der Querschnitt und die Stärke der Gitterbrücke die geometrischen Maße von jedem einzelnen Lumineszenzelement aufweisen und mit dem Rastermaß der Lichtdetektormatrix zusammenfallen, dass die Rückfläche des genannten Metallgitters (2) dabei eine Reflexionsspiegelschicht (10) aufweist, während auf der Frontfläche eine mehrteilige Halbleitermatrix entsteht, deren jedes Element im Kontakt mit den Elementen des Lumineszenzdetektors (7) steht, welche durch die Röntgenstrahlung mit einer Energie von 30 bis 140 keV gleichzeitig erregbar sind.

2. Mehrteiliger Röntgenstrahlendetektor nach Anspruch 1,
**dadurch gekennzeichnet,**
**dass** das Metallgitter (2) aus den Elementen mit den Atomnummern von N=24 bis N=74 ausgebildet ist, wobei die Gittergröße 2 bis 60 Windungen pro 1 mm beträgt.

3. Mehrteiliger Röntgenstrahlendetektor nach Anspruch 1,
**dadurch gekennzeichnet,**
**dass** seine röntgenstrahlenempfindliche Schicht in Form eines mehrteiligen Mosaiks ausgebildet ist, die aus einer Röntgenleuchtstoffschicht (6) mittels der Maschen (3) des aus den Elementen mit den Atomnummern von 24 bis 74 gebildeten Metallgitters (2) ausgebildet ist.

4. Mehrteiliger Röntgenstrahlendetektor nach Anspruch 1,
**dadurch gekennzeichnet,**
**dass** seine Rückfläche mit einem 2000 Å bis 6000 Å dicken zweilagigen Metallspiegelfilm beschichtet ist, wobei eine bis zu 1000 Å dicke metallische Silberschicht unmittelbar auf dem Detektor liegt, und wobei eine bis zu 5000 Å dicke Aluminiumspiegelschicht oberhalb der Silberschicht gebildet ist.

5. Mehrteiliger Röntgenstrahlendetektor nach Anspruch 1,
dessen Gitterwindungen mit einer bis zu 2000 Å dicken metallischen galvanisch erzeugten Silberspiegelschicht bedeckt sind.

6. Mehrteiliger Röntgenstrahlendetektor nach Anspruch 1,
**dadurch gekennzeichnet,**
**dass** bei der Erzeugung einer mehrteiligen Zellenstruktur der röntgenstrahlenempfindlichen Schicht des Detektors metallene gewebte, gewickelte oder galvanische Netzbahnen verwendet werden, deren freie Siebfläche über 48 % und vorwiegend über 61 % beträgt, wobei die Menge der Drähte pro Längeneinheit des Trägers über 3 Stück pro Millimeter beträgt.

7. Mehrteiliger Röntgenstrahlendetektor nach Anspruch 1,
**dadurch gekennzeichnet,**
**dass** als Metallgitterbahnen darin gewebte Netze aus nichtrostendem Stahl, Nickel, Bronze mit freier Siebfläche bis 64,5 % sowie gewickelte Netze aus feinem Wolframdraht mit freier Siebfläche bis 85 % verwendet werden.

8. Mehrteiliger Röntgenstrahlendetektor nach Anspruch 1,
**dadurch gekennzeichnet,**
**dass** die röntgenstrahlenempfindliche Schicht ein Dispersionsmedium darstellt, welches aus Polykarbonat mit einer Brechungszahl von n = 1,59-1,60 besteht, wobei der Kunststoff die disperse Phase aus Seltenerd-Röntgenleuchtstoff-körnern mit einer Brechungszahl von n = 2,2 umhüllt.

9. Mehrteiliger Röntgenstrahlendetektor nach Anspruch 1,
**dadurch gekennzeichnet,**
**dass** für die Fertigung ein Spritzgussverfahren eingesetzt ist, bei dem eine flüssige Röntgenleuchtstoff-Suspension in der Lösung eines Plastikbinders über die Oberfläche der Lichtdetektormatrix (7) verteilbar ist, dass als solcher Kunststoff Polykarbonat mit einer Molekülmasse von M = 10000-15000 Kohlenstoffeinheiten verwendet ist, welches in einem im organischen niedrigsiedenden Lösungsmittel, z. B. Methylenchlorid, aufgelöst ist, wobei der Pulver-Röntgenleuchtstoffgehalt in der Suspension 20 bis 65 % (Gew.) der Kunststoffmasse beträgt.

10. Mehrteiliger Röntgenstrahlendetektor nach Anspruch 1,
**dadurch gekennzeichnet,**
**dass** die Lichtdetektormatrix (7) aus Schichten von amorphem oder Polykristallsilizium nach einem Verfahren der lichtoptischen Fotolithografie und des chemischen Ätzens ausgebildet ist.

11. Mehrteiliger Röntgenstrahlendetektor nach Anspruch 1,
**dadurch gekennzeichnet,**
**dass** die Bildung der röntgenstrahlenempfindlichen Schicht unmittelbar auf der Lichtdetektormatrix (7) erfolgt, und dass darüber eine Metallgitterbahn so festgemacht ist, dass die optischen Mittelpunkte der Lichtdetektoren auf einer Linie liegen, die über die Mittelpunkte des «freien Querschnittes» jeder Masche (3) der Gitterbahn verläuft.

12. Mehrteiliger Röntgenstrahlendetektor nach Anspruch 1,
**dadurch gekennzeichnet,**
**dass** die röntgenstrahlenempfindliche Schicht auf einer Einzelplatte gebildet ist, welche aus einem für Röntgenstrahlung transparenten Material hergestellt ist, dass oberhalb dieser Platte eine Metallgitterbahn festgemacht ist, welche ihrerseits dicht an die Lichtdetektormatrix (7) mit einer solcher Seite festgemacht ist, die ein Metallgitter (2) mit Maschen (3) enthält, dass die Maschen (3) mit Rontgenleuchtstoff (6) so gefüllt sind, dass die optischen Mittelpunkte der Lichtdetektoren auf einer Linie liegen, die über die Mittelpunkte des «freien Querschnittes» jeder Masche (3) der Gitterbahn verläuft.

13. Mehrteiliger Röntgenstrahlendetektor nach Anspruch 1,
**dadurch gekennzeichnet,**
**dass** der Bildkontrast 50 % bei einer Auflösung von über 4 Linienpaare pro 1 mm überschreitet.

14. Seltenerdröntgenleuehtstoff mit aktivierten Seltenerdmetallverbindungen,
**dadurch gekennzeichnet,**
**dass** seine diskreten Heterophasen-Lumineszenzelemente (4) einkristalline Mikrokörner von Seltenerdleuchtstoff auf der Basis von Multiligandoxysulfiden der Elemente aus der Gruppe Gadolinium, Lutetium, Europium, Dysprosium, Wismut und Rhenium enthalten, wobei der Sauerstoff in der Basis teilweise durch Halogen und der Schwefel durch Stickstoff ersetzt sind, und dass diese diskreten Heterophasen-Lumineszenzelemente (4) folgende stöchiometrische Formel aufweisen

$$(\Sigma Me)_2 O_{2-x} (\Sigma Hal)_{x/2} N^{-3}_{x/2} S_{1+y}$$

wobei $\Sigma Me$ = Gd und/oder Lu und/oder Dy und/oder Eu und/oder Bi und/oder Re
Hal=$F^{-1}$ und/oder $Cl^{-1}$ und/oder $Br^{-1}$ und/oder $J^{-1}$, $0,01 < x \leq 0,08$, $0,001 \leq y \leq 0,01$ sind
**dass** die Körner des genannten Leuchtstoffes in Form von räumlichen Polyedern gebildet sind, die mit disperser Phase des Plastikbinders bei einem Massenverhältnis zwischen 20 bis 65 % umhüllt sind.

15. Verfahren zur Herstellung von Röntgenleuchtstoff mittels Mitfällung der Seltenerdmetallverbindungen mit nachfolgender Wärmebehandlung in der Schmelze, die aus Seltenerdionen und Ionen mit d-Hülsen (Bi, Re, $Br^{-1}$, $Cl^{-1}$ und $J^{-1}$) besteht,
**dadurch gekennzeichnet,**
**dass** der Synthesevorgang in zwei Stufen verläuft, wobei in der ersten Stufe Oxyhalogenide der Elemente entstehen, die eine kationische Untergruppe mittels Zusammenwirkung der mitgefällten Ausgangsoxide der Seltenerdmetalle, Bi und Re mit Ammoniumhalogeniden bei einer Temperatur von T=400˚C bis T=700˚C im Laufe von 1 bis 4 Stunden zusammenstellen, dass danach das hergestellte Produkt in der Schmelze der alkalischen Chalkogeniden bei einem Molekularverhältnis zwischen 1:1 und 1:3 bei Temperaturen von T=800˚ C bis T=1200˚ C im Laufe von 2 bis 8 Stunden unter nachfolgender Herauslösung des herstellten Produktes mit Wasser und Mineralsäurelösungen erneut thermisch behandelt wird.

Fig. 1

Effektivität der Röntgenstrahlenaufnahme bei verschiedenen kristallinen Matrizen

12 - Deckglas

11 - Kunststoffschicht

10 - Reflexionsbeschichtung

1 - Mehrteiliger Szintillator
2 - Metallgitter
3 - Gitter-masche
6 - Röntgenleuchtstoff-korn
5 - Kunststoff, transparent für Licht
4 - Heterophasen-Szintillator-Element
7 - Lichtdetektor-matrix
8 - Lichtdiode
9 - Grundplatte

Fig. 2    Aufbau der Einrichtung

Fig. 3    Gussfilmbeschichtungen für den Röntgenszintillator

S4700 10.0kV 11.5mm x8.00k SE(M)     5.00um

Fig. 4    Mikroaufnahme vom Einzelkorn des Röntgenleuchtstoffes

Neutronen Szintillator Gd$_2$O$_2$S [Tb 3 %] – Stärke 208 μm

Fig. 5  Aufnahme von einem Bildschirm des vorgeschlagenen Röntgenstrahlendetektors

**INTERNATIONAL SEARCH REPORT**

| International application No. |
| --- |
| PCT/RU 2010/000449 |

A. CLASSIFICATION OF SUBJECT MATTER

G01T 1/20 (2006.01); C09K 11/04 (2006.01)

According to International Patent Classification (IPC) or to both national classification and IPC

B. FIELDS SEARCHED

Minimum documentation searched (classification system followed by classification symbols)

D03D 1/00, G01T 1/00, 1/02, 1/15, 1/16, 1/17, 1/18, 1/20, 1/22, 1/24, 1/29, 1/36, 3/00-3/08, G21K 5/00, 5/04, C09K 11/04

Documentation searched other than minimum documentation to the extent that such documents are included in the fields searched

Electronic data base consulted during the international search (name of data base and, where practicable, search terms used)

USPTO DB, Esp@senet, RUPTO DB, WIPO

C. DOCUMENTS CONSIDERED TO BE RELEVANT

| Category* | Citation of document, with indication, where appropriate, of the relevant passages | Relevant to claim No. |
| --- | --- | --- |
| A | US 2006/0033030 A1 (KABUSHIKI KAISHA TOSHIBA) 16.02.2006 | 1-15 |
| A | US 7265357 B2 (SIEMENS AKTIENGESELLSCHAFT) 04.09.2007 | 1-15 |
| A | RU 2245588 C2 (BELUGIN VLADIMIR MIKHAILOVICH et al.) 27.01.2005 | 1-15 |
| A | SU 926105 A (VSESOJUZNY NAUCHNO-ISSLEDOVATELSKY INSTITUT TEKSTILNO-GALANTEREINOI PROMYSHLENNOSTI) 07.05.1982 | 1-15 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 November 2010 (02.11.2010) | 09 December 2010 (09.12.2010) |

| Name and mailing address of the ISA/ <br><br> RU <br><br> Facsimile No. | Authorized officer <br><br><br> Telephone No. |
| --- | --- |

Form PCT/ISA/210 (second sheet) (July 1998)

**INTERNATIONAL SEARCH REPORT**

International application No.

PCT/RU 2010/000449

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

**See supplemental sheet**

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (July 2009)

INTERNATIONAL SEARCH REPORT

International application No.

PCT/RU 2010/000449

The claimed group comprises three subjects: a multi-element detector (claim 1), a rare-earth x-ray phosphor (claim 14), and a method for producing an x-ray phosphor (claim 15).

Claims 1 and 14 are characterized by the common defining feature of the presence of heterophase discrete luminescent elements.

Claims 14 and 15 are characterized by the common defining feature of the formation of oxyhalides.

However, claims 1 and 15 do not contain any of the same or corresponding special technical features that might define a contribution which each of the claimed inventions, considered as a whole, makes over the prior art.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 1569906, Zhitnik L., Tindo L.
- US 5126573 A, West P.
- US 5302817 A, K. Yokota
- US 20060033030 A1
- US 2005028044 A, Mollov N.
- US 6252231 B1, Horotian S.G.

**Non-patent literature cited in the description**

- Image forming in roentgenography. 2000, vol. 1, 346
- **Tevtor A. Philips.** *Tech Rev.,* 1976, vol. 14, SS.33-43
- **Gurvich A.M. ; Malova A.M. ; Soschin N.P.** *UdSSR Erfinderzertifikat,* 21 February 1978, 457789
- **Tomas A.** *J.Electrochem.Soc.,* 1971, vol. 118, 151
- **Gurvich A.M. ; Soschin N.P.** *Izvestiya Acad. of Sciences of USSR, ser. Phys.,* 1977, vol. 41, 1372-1379
- **Well S.** *The Proc. of Medical Imaging Institute of Phys. Bristol. G.B.,* 1992
- **Rocha J.G et al.** *IEEE Trans.,* 2002, vol. 6 (5), 7803
- **Rocha J.G.** *14 European Conf. On Solid-State Transistors,* 2000, vol. 2, 27
- **Nagarkar V.V.** *Nuclear Science. IEEE Transaction,* 2006, vol. 50 (3), 297
- **Deok Jm.Jung.** *ETRI Journal,* 2008, vol. 30 (5), 747
- **Simon M.** *Medical Phys.,* 2008, vol. 35, 968-981
- **Metallgitter.** *GOST,* 2002, 6613-86